Europäisches Patentamt

European Patent Office

Office européen des brevets

(11) Veröffentlichungsnummer: **0 355 539 B1**

# (12) EUROPÄISCHE PATENTSCHRIFT

(45) Veröffentlichungstag der Patentschrift: **30.12.92**

(21) Anmeldenummer: **89114512.0**

(22) Anmeldetag: **05.08.89**

(51) Int. Cl.⁵: **B60Q 1/10**

(54) **Verfahren und Einrichtung zur Regelung der Leuchtweite oder des Niveaus eines Fahrzeugs.**

(30) Priorität: **18.08.88 DE 3827983**

(43) Veröffentlichungstag der Anmeldung:
**28.02.90 Patentblatt 90/09**

(45) Bekanntmachung des Hinweises auf die
Patenterteilung:
**30.12.92 Patentblatt 92/53**

(84) Benannte Vertragsstaaten:
**DE ES FR GB IT SE**

(56) Entgegenhaltungen:
**DE-A- 3 110 094**
**FR-A- 2 581 005**
**GB-A- 1 508 573**

(73) Patentinhaber: **Hella KG Hueck & Co.**
**Rixbecker Strasse 75 Postfach 28 40**
**W-4780 Lippstadt(DE)**

(72) Erfinder: **Hufnagel, Joachim**
**Schützenstrasse 13**
**W-5750 Menden 1(DE)**
Erfinder: **Knittel, Otto**
**Grabbeweg 3**
**W-4770 Soest(DE)**
Erfinder: **Hussmann, Micha**
**Lambertring 25 b**
**W-4780 Lippstadt 4(DE)**

## Beschreibung

Die Erfindung betrifft Verfahren zur Regelung der Leuchtweite oder des Niveaus eines Fahrzeugs gemäß dem Oberbegriff des Anspruchs 1 und des Anspruchs 16, eine Einrichtung gemäß dem Oberbegriff des Anspruchs 9 und eine Einrichtung zur Durchführung des Verfahrens gemäß dem Oberbegriff des Anspruchs 20.

Eine Einrichtung zur Durchführung eines Verfahrens dieser Art ist aus der deutschen Offenlegungsschrift DE-OS 31 10 094 bekannt.

Fühler, die die relative Stellung der Karosserie eines Fahrzeugs zu den Fahrzeugachsen oder Fahrzeugrädern messen, sind an einem Analog-Multiplexer angeschlossen, der die von den Fühlern anliegenden Signale über einen Analog/Digital-Wandler einem Mikroprozessor zuführt. Eine Filterung der anliegenden Signale erfolgt, indem in einem festgelegten Zeitabstand eine Mittelwertbildung der Signale durchgeführt wird. Dazu wird die Anzahl der einzubeziehenden Meßwerte vorgegeben. Aus den Mittelwerten wird dann für je ein Fühlerpaar ein Differenzsignal gebildet, das einem Scheinwerfereinstellwert entspricht. Jedes dieser Differenzsignale wird einem Digital/Analog-Wandler zugeführt, der über je einen nachgeschalteten Operationsverstärker mit einer Scheinwerferstelleinrichtung verbunden ist. In Abhängigkeit von dem Vorzeichen der Differenzsignale werden somit Stellelemente vor- oder zurückbewegt und Scheinwerferlageregister im Mikroprozessor hoch- oder heruntergezählt. Das Differenzsignal muß zudem einen vorgegebenen Schwellwert überschreiten, bevor die Scheinwerferstelleinrichtung betätigt wird.

Nachteilig erweist sich hierbei, daß die Mittelung nur in einem festgelegten Zeitabstand erfolgt, wodurch eine Anpassung an wechselnde Betriebsbedingungen des Fahrzeugs nicht erfolgt und somit eine Blendgefahr und eine Gefährdung des Gegenverkehrs nicht ausgeschlossen ist. In diesem Zusammenhang erweist sich als nachteilig, wenn wie hier der Zeitabstand für die Mittelung auf z. B. eine Minute festgelegt wird, weil bei diesem Zeitabstand kurzzeitige Änderungen nicht erfaßt und korrigiert werden können.

Weiterhin ist nachteilig, daß die Anzahl der bei der Mittelung berücksichtigten Signale experimentell vorgegeben werden, da dies umfangreiche Untersuchungen erfordert, die nicht einfach und kostengünstig durchführbar sind.

Aus der deutschen Offenlegungsschrift DE-OS 31 29 891 ist eine Einrichtung zur Durchführung eines Verfahrens der genannten Art vorbekannt, die zwei Fühler aufweist, die Signale erzeugen, die von der relativen Stellung der Karosserie zu den Rädern abhängen. Diese Signale werden einem Differenzbildner zugeführt, der ein Differenzsignal bildet, welches an einen Filter weitergeleitet wird. Der Filter weist neben einem als RC-Glied ausgebildeten Tiefpaßfilter, das unerwünschte Frequenzen des Differenzsignals sperrt, Filterelemente auf, die eine variable Charakteristik der Frequenzabtrennung in Abhängigkeit von der Amplitude der Signale der Fühler vorgeben. Die Filterelemente sind als Schwellwertelemente, insbesondere Gleichrichter, ausgebildet, die eine obere und untere Amplitudenschwelle festlegen. Das gefilterte Signal wird an eine Steuervorrichtung weitergeleitet, die mit Stellelementen zur Einstellung von Scheinwerfern verbunden sind.

Als nachteilig erweist sich hierbei, daß die Amplitudenschwellwerte nur auf zwei Werte fest einstellbar sind und die Frequenz des Filters nur geringfügig veränderbar ist, wodurch häufig eine optimale Anpassung der Einrichtung an unterschiedliche Betriebsarten des Fahrzeugs nicht erfolgen kann. Zudem wird bei jedem überschreiten der Schwellwerte durch das Differenzsignal eine Einstellung der Scheinwerfer vorgenommen, wodurch die Lebensdauer der Stellelemente herabgesetzt wird.

Aus der deutschen Offenlegungsschrift DE-OS 29 33 308 ist eine Einrichtung zur Regelung der Leuchtweite bekannt, bei der ein erster Meßwert, der die relative Lage der Fahrzeugkarosserie zu einer festen Ebene angibt, bestimmt und abgespeichert wird und bei der ein zweiter Meßwert, der die relative Lage der Fahrzeugkarosserie zu der gleichen festen Ebene nach einer Beladung angibt, bestimmt wird. Der Vergleich der beiden Meßwerte liefert ein Signal, dessen Größe ein Maß für die erforderliche Verschwenkung der Scheinwerfer ist. Als Meßwertgeber dient dabei ein Pendel oder ein Doppelpendel. Die Bestimmung der Meßwerte ist durch das öffnen und Schließen der Türen oder Klappen des Fahrzeugs ein- und ausschaltbar.

Als nachteilig erweist sich hierbei, daß die Einstellung der Scheinwerfer nur im Stand des Fahrzeugs erfolgt und relative Lageänderungen der Fahrzeugkarosserie zu den Radachsen während der Fahrt unberücksichtigt bleiben.

Aus der deutschen Offenlegungsschrift DE-OS 34 18 646 ist ein Verfahren und eine Einrichtung zur Regelung des Niveaus eines Fahrzeugs der genannten Art bekannt.

Die Einrichtung weist hydraulische Federungs- bzw. Aufhängungseinheiten zwischen den Achsen und der Karosserie des Fahrzeugs auf, die zum einen eine Federung und Dämpfung der Karosseriebewegungen und zum anderen eine Einstellung des Niveaus des Fahrzeugs ermöglichen. Zur Ermittlung der relativen

EP 0 355 539 B1

Stellung der Fahrzeugkarosserie zu der Hinterachse und der Vorderachse weist die Einrichtung an der Vorderachse und der Hinterachse je einen Karosseriehöhenfühler auf, die einer Niveauregulierungseinheit jeweils ein Signal liefern, das die Stellung der Karosserie zu den Achsen angibt. Entsprechend dieser anstehenden Signale von den Karosseriehöhenfühlern, regelt die Niveauregulierungseinheit die Erzeugung von Druckluft und die Zuführung von Druckluft zu den Federungs- bzw. Aufhängungseinheiten. Zudem ist die Niveauregulierungseinheit mit einem Fahrgeschwindigkeitsfühler verbunden, so daß der Zeitabstand für die Einleitung einer Niveauregulierung und damit die Filterzeitkonstante für eine Mittelwertbildung der Signale von den Karosseriehöhenfühlern von der Fahrgeschwindigkeit abhängig ist. Unter einem vorgegebenen Schwellwert für die Fahrgeschwindigkeit ist der Zeitabstand für die Einleitung einer Niveauregulierung und damit die Filterzeitkonstante für eine Mittelwertbildung kürzer als für eine Fahrgeschwindigkeit oberhalb des vorgegebenen Schwellwertes.

Der Zeitabstand für die Einleitung einer Niveauregulierung wird zudem dann verkürzt, wenn der Vorgang der Niveauregulierung bei einer Fahrgeschwindigkeit unterhalb des vorgegebenen Schwellwertes mit einem zugehörigen kurzen Zeitabstand eingeleitet wurde und der Vorgang der Niveauregulierung jedoch beendet wird, wenn das Fahrzeug eine Fahrgeschwindigkeit oberhalb des vorgegebenen Schwellwertes angenommen hat, wodurch erreicht wird, daß das Niveau des Fahrzeugs möglichst ohne große Verzögerung bei einem Beschleunigungsvorgang auf den vorgegebenen Sollwert eingestellt wird.

Dies wird hier dadurch erreicht, daß Luftfederungskammern der Federungs- bzw. Aufhängungseinheiten mit Luftfederungshilfskammern von der Niveauregulierungseinheit in Verbindung gesetzt werden können, so daß die Federkonstante verringert oder erhöht wird. Sind die Luftfederungskammern nicht mit den Luftfederungshilfskammern verbunden, stellt sich eine größere Federkonstante ein. Die Verbindung und Trennung der Luftfederungskammern mit und von den Luftfederungshilfskammern zur Veränderung der Einstellung der Härte der Federung erfolgt hier über Magnetmechanismen an den Federungs- bzw. Aufhängungseinheiten.

Als nachteilig erweist sich hierbei, daß nur ein Schwellwert für die Fahrgeschwindigkeit vorgegeben wird, weil somit die Zeitabstände für die Einleitung eines Niveauregulierungsvorgangs, durch die Vorgabe von nur zwei Zeitabständen, nur ungenügend den jeweiligen Fahrgeschwindigkeiten angepaßt sind und der Übergang von dem einen Zeitabstand zu dem anderen Zeitabstand sehr groß ist.

Dadurch, daß der geringste Zeitabstand für die Einleitung eines Niveauregulierungsvorgangs hier auf 1,5 sec. festgelegt ist, ergibt sich insbesondere der Nachteil, daß selbst bei sehr langsamen Fahrgeschwindigkeiten große und schnell ablaufende Änderungen des Niveaus durch die Regeleinrichtung nicht ausgeglichen werden können und somit nur eine quasi-statische Regelung des Niveaus des Fahrzeugs ermöglicht wird, die auf Änderungen der Betriebsart und des Fahrzustands des Fahrzeugs nicht reagieren kann.

Die Erfindung hat die Aufgabe, ein Verfahren und eine Einrichtung zur Durchführung des Verfahrens zu schaffen, das einfach und kostengünstig durchführbar und herstellbar ist, daß eine an die Betriebsdauer und die jeweiligen unterschiedlichen Betriebsarten angepaßte Regelung der Leuchtweite oder des Niveaus eines Fahrzeugs ermöglicht und die Sicherheit bei dem Betrieb des Fahrzeugs erhöht.

Die Aufgabe wird erfindungsgemäß durch die Merkmale des kennzeichnenden Teils des Anspruchs 1 und des Anspruchs 9 gelöst.

Dadurch, daß der festgelegte Zeitabstand und die Zeit, über die gemittelt wird, durch eine vorgegebene veränderliche Filterzeitkonstante bestimmt ist, ergibt sich der Vorteil, daß das Verfahren einfach und kostengünstig durchführbar ist und leicht an unterschiedliche Anforderungen anpaßbar ist.

Vorteilhaft ist es, daß mit fortschreitender Betriebsdauer nach einem Start oder einem Einschalten der Beleuchtungsanlage oder einer Änderung der Betriebsart des Fahrzeugs die Filterzeitkonstante von kürzeren Zeiten auf längere Zeiten erhöht wird, weil so eine an die Betriebsdauer und die jeweiligen unterschiedlichen Betriebsarten angepaßten Regelung der Leuchtweite oder des Niveaus eines Fahrzeugs erreicht wird, die die Blendgefahr des Gegenverkehrs herabsetzt, die eigene Sicht verbessert und somit die Sicherheit bei dem Betrieb des Fahrzeugs erhöht.

Es ist von Vorteil, daß ein erster Taktsignalgeber mit dem ersten Zeitglied verbunden ist, weil somit einfach und kostengünstig eine Filterzeitkonstante festlegbar ist.

In diesem Zusammenhang ist es vorteilhaft, daß das erste Zeitglied über eine vorgegebene Anzahl aufeinanderfolgende erste Unterzeitglieder verfügt, wodurch die Filterzeitkonstante einfach verändert werden kann und eine Anpassung der Einrichtung an unterschiedliche Betriebsarten des Fahrzeugs möglich ist.

Vorteilhaft ist es, daß die ersten Unterzeitglieder Filterzeitkonstanten vorgeben, die in der Aufeinanderfolge der ersten Unterzeitglieder ansteigen, weil so mit steigender Betriebsdauer durch ein Erhöhen der Filterzeitkonstante kurzzeitige Störungen herausgefiltert werden, wodurch die Sicherheit bei dem Betrieb des Fahrzeugs erhöht wird, da bei diesen kurzzeitigen Störungen keine Korrektur der Scheinwerfereinstellung vorgenommen wird und somit eine Fehleinstellung der Scheinwerfer vermieden wird und die Lebens-

3

dauer der Stellelemente heraufgesetzt wird.

Dadurch, daß die ersten Unterzeitglieder mit einer ersten Schalteinrichtung verbunden sind und daß die erste Schalteinrichtung Schalter aufweist, die mit den ersten Unterzeitgliedern verbunden sind, ergibt sich der Vorteil, daß mit zunehmender Betriebsdauer und bei einer Änderung der Betriebsart des Fahrzeugs die Schalteinrichtung von den Unterzeitgliedern angesteuert wird und diese Schalter wiederum die Unterzeitglieder einschalten und ausschalten, wodurch jeweils die Filterzeitkonstante eingeschaltet wird, die der jeweiligen Betriebsdauer und der jeweiligen Betriebsart am besten entspricht, was die Sicherheit bei dem Betrieb des Fahrzeugs erhöht.

Vorteilhaft ist es, daß die ersten Unterzeitglieder des ersten Zeitglieds elektrisch leitend mit dem Filter verbunden sind, wodurch einfach und kostengünstig die jeweils wirkende Filterzeitkonstante dem Filter als Schaltsignal zugeführt wird, das die Dauer der Mittelwertbildung und den Zeitabstand bestimmt, nach dessen Ablauf eine neue Mittelwertbildung begonnen wird.

Weitere vorteilhafte Ausgestaltungen und Weiterbildungen des erfindungsgemäßen Verfahrens und der Einrichtung zur Durchführung des Verfahrens ergeben sich aus den Unteransprüchen.

Dadurch, daß nach der Differenzbildung der Signale von der Vorderachse und der Hinterachse eine Spannungs-Frequenzumsetzung erfolgt, ergibt sich der Vorteil, daß das Differenzsignal als ein digitales Frequenzsignal vorliegt und somit einfach weiter verarbeitbar ist.

Vorteilhaft ist, daß die Filterung aus einer Zählung, Aufsummierung und Speicherung des Differenzsignals besteht, wobei die Zählung über die jeweils wirksame Filterzeitkonstante erfolgt, weil so auf einfache und kostengünstige Weise eine Mittelung des Differenzsignals durchgeführt wird und durch die Abspeicherung des Differenzsignals eine verspätete Ausgabe ermöglicht wird. In diesem Zusammenhang erweist sich als vorteilhaft, daß die Zählung durch eine Teilung der Frequenz des Differenzsignals vor der Zählung beeinflußt wird, die von der jeweils wirksamen Filterzeitkonstante abhängt, und daß nach Ablauf der jeweils wirksamen Filterzeitkonstante die Zählung beendet wird und das aufsummierte, gespeicherte Differenzsignal ausgegeben wird, weil so das abgespeicherte Differenzsignal auch bei unterschiedlich langen Filterzeitkonstanten ein festes Maß für die Einstellung der Scheinwerfer oder des Niveaus des Fahrzeugs vorgibt und die Ausgabe zu einem definierten Zeitpunkt erfolgt.

Weiterhin ist es vorteilhaft, daß die jeweils wirksame Filterzeitkonstante aus einem Taktsignal durch Teilung oder Multiplikation abgeleitet wird, wodurch die Filterzeitkonstanten einfach und kostengünstig bereitgestellt werden.

Dadurch, daß nach Ablauf einer Filterzeitkonstante die nächst längere Filterzeitkonstante wirksam geschaltet wird, ergibt sich der Vorteil, daß in Abhängigkeit von der Betriebsdauer des Fahrzeugs die Mittelung in vorgegebenen, länger werdenden Zeitabschnitten erfolgt, was zu einer Schonung der Stellelemente beiträgt und die Sicherheit bei dem Betrieb des Fahrzeugs erhöht.

Vorteilhaft ist es, daß die Ausgabe des aufsummierten, gespeicherten Differenzsignals nach abgeschlossener Zählung um die jeweils wirksame Filterzeitkonstante verzögert erfolgt, wodurch die Ansteuerung der Stellelemente in längeren Zeitabständen erfolgt, was die Lebensdauer der Stellelemente erhöht. Es ist von Vorteil, daß das aufsummierte, gespeicherte Differenzsignal als konstanter Wert ausgegeben wird, bis nach dem Ablauf der Filterzeitkonstante und der durch die Filterzeitkonstante bestimmten Verzögerung ein neues gespeichertes Signal ausgegeben wird, weil somit die Einstellung der Scheinwerfer oder des Niveaus des Fahrzeugs bis zu einer neuen Ausgabe eines abgespeicherten Signals auf einen konstanten Wert gehalten wird.

Dadurch, daß bei einem Start oder bei einem Einschalten der Beleuchtungsanlage oder bei einer Änderung der Betriebsart des Fahrzeugs die kürzeste Filterzeitkonstante oder eine kürzere Filterzeitkonstante als die jeweils wirksame Filterzeitkonstante eingeschaltet wird, ergibt sich der Vorteil, daß die Regelung der Leuchtweite oder des Niveaus des Fahrzeugs entsprechend der Änderung der Betriebsart des Fahrzeugs oder dem Einschalten der Beleuchtungsanlage schneller erfolgt, wodurch die Sicherheit bei dem Betrieb des Fahrzeugs erhöht wird.

Vorteilhaft ist es, daß das Differenzsignal bei dem Einschalten der kürzesten Filterzeitkonstante unter Umgehung der Filterung direkt ausgegeben wird, wodurch eine unverzögerte Ansteuerung der Stellelemente erreicht wird, die bei Beladungsänderungen des Fahrzeugs oder bei Einschalten der Beleuchtungsanlage erforderlich ist.

In diesem Zusammenhang ist es vorteilhaft, daß nach dem Ablauf dieser Filterzeitkonstante, während der gleichzeitig eine Filterung erfolgte, dieselbe Filterzeitkonstante nocheinmal eingeschaltet wird und gleichzeitig eine Ausgabe des gefilterten gespeicherten Differenzsignals erfolgt, weil auf diese Weise dafür gesorgt wird, daß die Stellelemente durch einen konstanten Ausgabewert angesteuert werden und gleichzeitig eine neue Mittelung über die gleiche Filterzeitkonstante erfolgt, deren abgespeicherter Wert mit Verzögerung ausgegeben wird, wobei durch die gewählte kurze Filterzeitkonstante eine möglichst schnelle

4

Regelung gewährleistet wird.

Es ist von Vorteil, wenn eine Änderung der Betriebsart durch einen vorgegebenen Schwellwert für eine negative Beschleunigung des Fahrzeugs bestimmt ist, wodurch bei einem starken Abbremsen des Fahrzeugs, das eine Nachregelung der Einstellung der Scheinwerfer oder des Niveaus des Fahrzeugs erfordert, die kürzeste oder eine kürzere Filterzeitkonstante eingeschaltet wird, wodurch die Sicherheit bei dem Betrieb des Fahrzeugs erhöht wird. In diesem Zusammenhang ist es vorteilhaft, daß eine Änderung der Betriebsart des Fahrzeugs durch einen vorgegebenen Schwellwert für eine positive Beschleunigung des Fahrzeugs bestimmt ist, wodurch auch hier eine sofortige kurzzeitige Nachregelung erfolgt. Man kann eine nach dem überschreiten der Schwellwerte eingeschaltete direkte Ausgabe erst dann abschalten, wenn die Schwellwerte unterschritten werden, wodurch bei einem langanhaltenden Beschleunigungsvorgang keine längere Filterzeitkonstante aktiviert wird, was die Sicherheit bei dem Betrieb des Fahrzeugs erhöht. Dadurch, daß die direkte Ausgabe erst dann erfolgt, wenn die Schwellwerte über eine vorgegebene Zeit überschritten werden, ergibt sich der Vorteil, daß nicht bei jeder kurzzeitigen starken Bremsung die direkte Ausgabe eingeschaltet wird.

Es ist von Vorteil, daß das ausgegebene Differenzsignal mit einem periodisch sich ändernden Signal verglichen wird, wodurch man ein Ausgangssignal erhält, das ein konstantes Puls-Periodenverhältnis aufweist.

Dadurch, daß die Information des Signals nach dem Vergleich in dem Flankenabstand des entstandenen Puls-Periodenverhältnisses liegt, ergibt sich der Vorteil, daß das Signal, welches an den Stellelementen anliegt, unabhängig von der Spannungsamplitude ist und somit mögliche Fehleinstellungen vermieden werden, die durch Schwankungen der Spannung hervorgerufen werden könnten.

Vorteilhaft ist es, daß das nach dem Vergleich vorliegende, ein Puls-Periodenverhältnis aufweisende Signal gefiltert wird und einem Lageregelkreis zur Einstellung der Scheinwerfer oder des Niveaus des Fahrzeugs zugeführt wird, weil somit auf einfache und kostengünstige Weise eine Einstellung vorgenommen wird und Störungen des Ausgangssignals herausgefiltert werden.

Dadurch, daß der erste Fühler und der zweite Fühler mit dem Differenzbildner verbunden sind, daß der Differenzbildner zum einen direkt mit einer zweiten Schalteinrichtung verbunden ist und zum anderen über einen Spannungs-Frequenzumsetzer, einen Frequenzteiler, einen Zähler und einen Speicher mit der zweiten Schalteinrichtung verbunden ist, ergibt sich der Vorteil, daß das vom Differenzbildner gebildete Differenzsignal zum einen direkt über die zweite Schalteinrichtung ausgegeben werden kann oder aber eine Filterung des Differenzsignals erfolgt, die hier auf einfache und kostengünstige Weise durch ein Aufzählen und Abspeichern des Differenzsignals über eine vorgegebene Filterzeitkonstante realisiert ist.

Es ist von Vorteil, daß eine erste Klemme mit einer Einschalterkennung verbunden ist, daß die Einschalterkennung mit Rücksetzeingängen der ersten Schalteinrichtung und der zweiten Schalteinrichtung verbunden ist und daß die erste Klemme mit der Klemme 15 oder der Klemme 56 des Fahrzeugs verbunden ist, wodurch bei einem Einschalten der Beleuchtungsanlage oder der Zündung des Fahrzeugs eine direkte Ausgabe des Differenzsignals von dem Differenzbildner erfolgt und gleichzeitig die kürzeste oder eine kürzere Filterzeitkonstante eingeschaltet wird, was die Sicherheit bei dem Betrieb des Fahrzeugs erhöht.

In diesem Zusammenhang ist es vorteilhaft, daß die zweite Klemme mit einem Beschleunigungssignalgeber verbunden ist, daß die zweite Klemme elektrisch leitend mit einem Schwellwertschalter verbunden ist und daß der Schwellwertschalter elektrisch leitend mit den Rücksetzeingängen des ersten Zeitglieds, des zweiten Zeitglieds, der ersten Schalteinrichtung, der zweiten Schalteinrichtung, des Zählers und des Speichers verbunden ist, weil somit bei einem Überschreiten eines vorgegebenen Beschleunigungswertes solange eine direkte Ausgabe des Differenzsignals von dem Differenzbildner an die Stellelemente erfolgt, bis der Schwellwert wieder unterschritten wird, wodurch eine Blendgefahr oder eine Sichteinschränkung bei einem Abbrechen des Beschleunigungsvorganges durch die direkte Regelung vermieden wird.

Dadurch, daß der Differenzbildner, der Spannungs-Frequenzumsetzer, der Frequenzteiler, der Zähler, der Speicher, die zweite Schalteinrichtung, der zweite Taktsignalgeber, der Komparator, die Einschalterkennung, der erste Taktsignalgeber, das erste Zeitglied, das zweite Zeitglied und die erste Schalteinrichtung teilweise oder ganz in einen Mikroprozessor zusammengefaßt sind, ergibt sich der Vorteil, daß die Einrichtung einfach und kostengünstig herstellbar und realisierbar ist.

Die Aufgabe wird erfindungsgemäß bei dem Verfahren gemäß Anspruch 16 dadurch gelöst, daß der festgelegte Zeitabstand und die Zeit, über die gemittelt wird, durch eine vorgegebene, veränderliche Filterzeitkonstante bestimmt ist, daß die Filterzeitkonstante mit zunehmender positiver und mit zunehmender negativer Beschleunigung des Fahrzeugs kontinuierlich oder diskontinuierlich auf kürzere Zeiten verkleinert wird, daß die Filterzeitkonstante mit abnehmender positiver und mit abnehmender negativer Beschleunigung kontinuierlich oder diskontinuierlich auf längere Zeiten erhöht wird und daß bei einer positiven und einer negativen Beschleunigung gleich Null die Filterzeitkonstante einen vorgegebenen Grenzwert aufweist.

Es ist von Vorteil, daß der festgelegte Zeitabstand und die Zeit, über die gemittelt wird, durch eine vorgegebene, veränderliche Filterzeitkonstante bestimmt ist, weil somit das Verfahren einfach und kostengünstig durchführbar ist und leicht an unterschiedliche Anforderungen anpaßbar ist.

Dadurch, daß die Filterzeitkonstante mit zunehmender positiver und mit zunehmender negativer Beschleunigung des Fahrzeugs kontinuierlich oder diskontinuierlich auf kürzere Zeiten verkleinert wird, daß die Filterzeitkonstante mit abnehmender positiver und mit abnehmender negativer Beschleunigung kontinuierlich oder diskontinuierlich auf längere Zeiten erhöht wird, ergibt sich der Vorteil, daß für alle Änderungen der Betriebsart des Fahrzeugs, die mit einer Änderung der Beschleunigung verbunden sind, die Regelung der Leuchtweite oder des Niveaus des Fahrzeugs diesen Änderungen einfach und kostengünstig angepaßt wird, wodurch erreicht wird, daß neben einer Schonung der verwendeten Stellelemente bei einem Leuchtweiteregler eine Blendung des Gegenverkehrs ausgeschaltet wird und sichergestellt wird, daß die Fahrbahn ohne Sehweiteverluste gut ausgeleuchtet wird. Bei der Regelung des Niveaus eines Fahrzeugs wird vorteilhaft, wie bei der Leuchtweiteregelung, immer dann schnell geregelt, wenn hohe Beschleunigungswerte vorliegen, die die Lage der Fahrzeugkarosserie stärker verändern als bei niedrigen Beschleunigungswerten. Insbesondere bei niedrigen Geschwindigkeiten, bei denen sich Beschleunigungsvorgänge stärker auf die Lage der Fahrzeugkarosserie zu der Straße auswirken, wird somit erreicht, daß die Regelung bei starken Beschleunigungen schneller die Stellelemente nachregelt.

In diesem Zusammenhang ist es vorteilhaft, daß bei einer positiven und einer negativen Beschleunigung gleich Null die Filterzeitkonstante einen vorgegebenen Grenzwert aufweist, weil somit ein häufiges und unnötiges Nachregeln der Stellelemente vermieden wird, was zu einer Schonung und Erhöhung der Lebensdauer der Stellelemente beiträgt und zudem gleichzeitig sicherstellt, daß aufgrund einer geeigneten Wahl des vorgegebenen Grenzwerts eine Regelung der Leuchtweite oder des Niveaus eines Fahrzeugs erfolgt, die die Sicherheit und den Komfort bei dem Betrieb nicht einschränkt.

Es ist vorteilhaft, daß vorgegebenen Bereichen positiver und negativer Beschleunigung je eine Filterzeitkonstante zugeordnet wird, weil somit eine besonders einfache und kostengünstige Regelung erreicht wird und zudem sichergestellt wird, daß die Regelung über den gesamten möglichen Beschleunigungsbereich feinfühlig und sicher genug arbeitet.

Dadurch, daß beginnend mit einer Beschleunigung gleich Null bei einer zunehmenden und einer abnehmenden positiven oder negativen Beschleunigung bei dem überschreiten vorgegebener Beschleunigungsstufen die Filterzeitkonstante um einen vorgegebenen Faktor erhöht oder erniedrigt wird, ergibt sich der Vorteil einer besonders einfachen und kostengünstigen Möglichkeit die Filterzeitkonstante vorgegebenen Beschleunigungsstufen anpassen zu können, woraus sich eine besonders hohe Sicherheit und Zuverlässigkeit bei der Regelung ergibt.

Es ist vorteilhaft, daß die Filterzeitkonstante von der Anzahl der Werte, über die gemittelt wird, und der Abtastrate für das Differenzsignal abhängt, weil sich somit eine besonders einfache und kostengünstige Ausführungsform für die Regelung ergibt und bei der Verwendung eines Mikrorechners die Filterzeitkonstanten einfach festlegbar sind.

Es ist von Vorteil, daß der Filter mit einem Beschleunigungsgeber verbunden ist, der mit einem Fahrgeschwindigkeitsgeber verbunden ist und daß der Filter Mittel aufweist, die den Beschleunigungssignalen von dem Beschleunigungsgeber vorgegebene Filterzeitkonstanten zuweisen und einschalten, weil somit zum einen auf besonders einfache und kostengünstige Weise aus einem Fahrgeschwindigkeitssignal ein Beschleunigungssignal gebildet werden kann, das dem Filter zugeführt wird und zum anderen durch die einfache und kostengünstige Erzeugung eines Beschleunigungssignals und der Zuführung dieses Beschleunigungssignals zu dem Filter auf einfache Weise den Beschleunigungssignalen Filterzeitkonstanten zugewiesen werden können, die die Regelung beeinflussen.

Dadurch, daß die Mittel durch mindestens einen Speicher gebildet werden, der den Beschleunigungssignalen eine Anzahl Werte, über die gemittelt wird, zuweist, ergibt sich der Vorteil einer besonders einfachen und kostengünstigen Ausbildung der Einrichtung.

Es ist von Vorteil, daß der Filter über je einen Subtrahierer mit je einem Regler verbunden ist, der mit je einem Motor zur Verstellung je eines Stellelements verbunden ist und daß entsprechend der Lage jedes Stellelements von je einem Lagesignalgeber ein Lagesignal gebildet wird, daß dem jeweiligen Subtrahierer zugeführt wird, weil somit auf einfache und kostengünstige Weise für die Ansteuerung jedes Stellelements ein Lageregelkreis gebildet wird, der sicherstellt, daß jedes Stellelement die vorgegebene gewünschte Lage sicher und zuverlässig einnimmt.

Die erfindungsgemäßen Verfahren und Einrichtungen zur Durchführung der Verfahren werden im folgenden anhand der Zeichnungen näher beschrieben.

Es zeigen

Figur 1 ein Blockschaltbild einer erfindungsgemäßen Einrichtung,

Figur 2 beispielhaft ein Ablaufdiagramm des erfindungsgemäßen Verfahrens entsprechend Figur 1,

Figur 3 ein Blockschaltbild eines weiteren Ausführungsbeispiels.

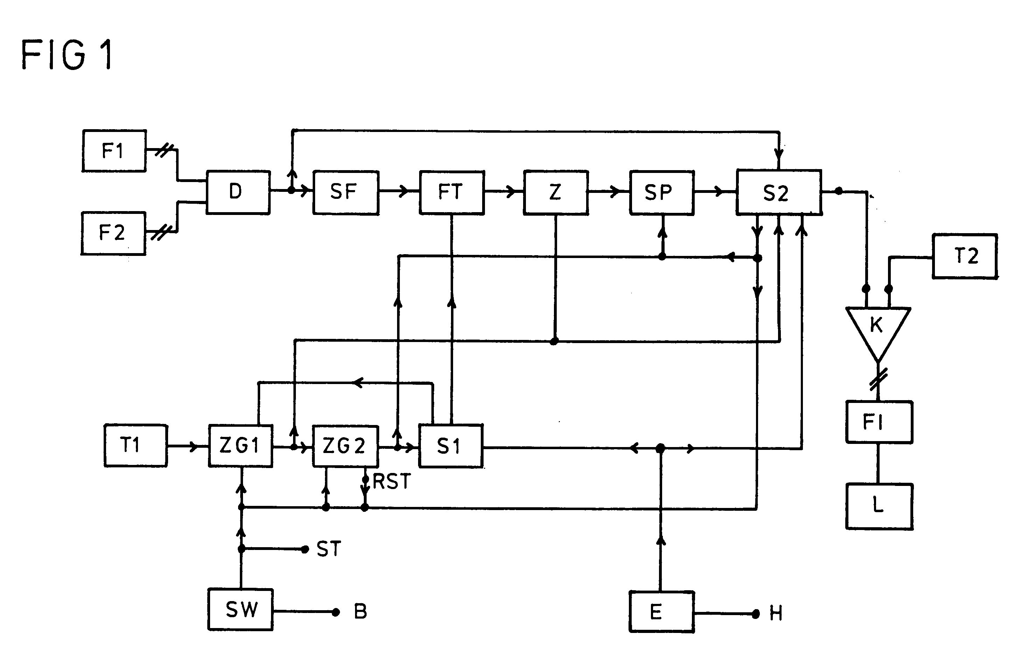

Figur 1 zeigt ein Blockschaltbild der erfindungsgemäßen Einrichtung nach Anspruch 9. Ein erster Fühler (F1) und ein zweiter Fühler (F2) sind elektrisch leitend direkt mit einem Differenzbildner (D) verbunden. Der erste Fühler (F1) kann dabei an der Vorderachse und der zweite Fühler (F2) an der Hinterachse des Kraftfahrzeugs angebracht sein. Beide Fühler liefern ein Signal, das von der relativen Stellung der Fahrzeugkarosserie zu der Vorderachse und der Hinterachse abhängt. Es können dabei auch mehrere Fühlerpaare an der Vorderachse und der Hinterachse angebracht sein. In dem Differenzbildner (D) wird ein Differenzsignal erzeugt. Um eine direkte Ausgabe des Differenzsignals an eine Stelleinrichtung zu gewährleisten, ist der Differenzbildner (D) direkt mit einer zweiten Schalteinrichtung (S2) verbunden, deren Ausgang mit Bauteilen der Stelleinrichtung verbunden ist.

Um eine Filterung des Differenzsignals durchführen zu können, ist der Differenzbildner (D) mit einem Filter verbunden, der es ermöglicht, die Leuchtweite oder das Niveau eines Fahrzeugs in Abhängigkeit von unterschiedlichen Betriebsarten und der Betriebsdauer des Fahrzeugs zu regeln.

Der Filter besteht dazu, aus einem Spannungs-Frequenzumsetzer (SF), der das von dem Differenzbildner (D) kommende analoge Differenzsignal in ein digitales Frequenzsignal umwandelt, um eine einfache und kostengünstige Verarbeitung des Differenzsignals zu ermöglichen. Der Spannungs-Freuqenzumsetzer (SF) ist elektrisch leitend mit einem Frequenzteiler (FT) verbunden, der in Abhängigkeit von der jeweils wirkenden Filterzeitkonstante die Frequenz erhöht oder erniedrigt. Der Frequenzteiler (FT) ist mit einem Zähler (Z) verbunden, der die einlaufenden Differenzsignale zählt. Der Zähler (Z) ist mit einem Speicher (SP) verbunden, der die gezählten Differenzsignale aufsummiert und abspeichert. Der Speicher (SP) kann dabei Teil des Zählers (Z) sein. Der Speicher (SP) ist elektrisch leitend mit der zweiten Schalteinrichtung (S2) verbunden.

Zur Erzeugung einer veränderlichen Filterzeitkonstante, die auf den Filter einwirkt, weist die erfindungsgemäße Einrichtung einen ersten Taktsignalgeber (T1) auf, der in voreingestellten Zeitabständen ein Taktsignal erzeugt. Der erste Taktsignalgeber (T1) ist elektrisch leitend mit einem ersten Zeitglied (ZG1) verbunden. Dieses erste Zeitglied (ZG1) verfügt über eine vorgegebene Anzahl erste Unterzeitglieder, durch die unterschiedliche Filterzeitkonstanten einstellbar sind. Die ersten Unterzeitglieder können dabei in einer aufeinanderfolgenden Reihenfolge geschaltet sein oder aber auch parallel zueinander geschaltet sein.

Der Ausgang des ersten Zeitglieds (ZG1) ist zum einen elektrisch leitend mit dem Zähler (Z) verbunden, um die Zeit zu bestimmen, über die die Differenzsignale gezählt werden und zum anderen mit einem zweiten Zeitglied (ZG2) verbunden, das die Zeit bestimmt, um die die Ausgabe des abgespeicherten Differenzsignals verzögert erfolgt. Das zweite Zeitglied (ZG2) kann dabei über eine vorgegebene Anzahl zweite Unterzeitglieder verfügen, die aufeinanderfolgen oder parallel zueinander geschaltet sind und den ersten Unterzeitgliedern des ersten Zeitglieds (ZG1) entsprechen.

Ein Ausgang des zweiten Zeitgliedes (ZG2) ist zum einen mit dem Speicher (SP) verbunden und zum anderen mit der ersten Schalteinrichtung (S1) verbunden, die eine vorgegebene Anzahl von Schaltern enthält.

Zudem weist das zweite Zeitglied (ZG2) einen Rücksetzausgang (RST) auf, um nach Ablauf der jeweils wirkenden Verzögerungszeit das erste Zeitglied (ZG1) und das zweite Zeitglied (ZG2) und deren Unterzeitglieder zurücksetzen zu können. Zu diesem Zweck ist der Rücksetzausgang (RST) mit Rücksetzeingängen des ersten und zweiten Zeitglieds (ZG1, ZG2) verbunden.

Die erste Schalteinrichtung (S1) ist elektrisch leitend mit dem ersten Zeitglied (ZG1) verbunden, damit die Schalter der ersten Schalteinrichtung (S1) die ersten Unterzeitglieder des ersten Zeitgliedes (ZG1) ein- und ausschalten können.

Die Ein- und Ausschaltung erfolgt dabei so, daß bei zunehmender Betriebsdauer des Fahrzeugs nach Ablauf einer Filterzeitkonstante die nächstlängere Filterzeitkonstante eingeschaltet wird. Die erste Schalteinrichtung (S1) ist mit dem Frequenzteiler (FT) des Filters verbunden, damit die Frequenzteilung der jeweils eingeschalteten Filterzeitkonstanten angepaßt wird, so daß das an der zweiten Schalteinrichtung (S2) anliegende Differenzsignal unabhängig von der eingeschalteten Filterzeitkonstanten ein Maß für die Einstellung der Scheinwerfer oder des Niveaus des Fahrzeugs vorgibt.

Der Ausgang des ersten Zeitglieds (ZG1) ist mit der zweiten Schalteinrichtung (S2) verbunden, um nach Ablauf der kürzesten Filterzeitkonstanten die direkte Ausgabe des Differenzsignals von dem Differenzbildner abzuschalten und die Ausgabe des gefilterten und aufsummierten Differenzsignals einzuschalten. Zu diesem Zweck weist die zweite Schalteinrichtung (S2) einen weiteren Ausgang auf, der mit dem Speicher (SP) elektrisch leitend verbunden ist, um diesem ein Signal zur Ausgabe des gespeicherten Wertes übermitteln zu können. Zudem ist dieser Ausgang der zweiten Schalteinrichtung (S2) mit den Rücksetzeingängen des ersten Zeitglieds (ZG1) und des zweiten Zeitglieds (ZG2) verbunden, um die kürzeste Filterzeitkonstante nochmals einzuschalten.

Zur Erkennung der Einschaltung der Zündung oder der Einschaltung der Beleuchtungsanlage des Fahrzeugs weist die erfindungsgemäße Einrichtung eine erste Klemme (H) auf, die zum einen mit der Klemme 15 oder der Klemme 56 des Fahrzeugs verbunden ist und zum anderen mit einer Einschalterkennung (E) verbunden ist. Der Ausgang der Einschalterkennung (E) ist zum einen mit der ersten Schalteinrichtung (S1) und zum anderen mit der zweiten Schalteinrichtung (S2) elektrisch leitend verbunden. Liegt an der ersten Klemme (H) nach dem Einschalten der Zündung oder dem Einschalten der Beleuchtungsanlage des Fahrzeugs ein positives Potential an, so erzeugt die Einschalterkennung (E) an ihrem Ausgang ein Signal, daß zum einen über die erste Schalteinrichtung (S1) die kürzeste Filterzeitkonstante einschaltet und zum anderen über die zweite Schalteinrichtung (S2) die direkte Ausgabe des Differenzsignals von dem Differenzbildner einschaltet.

Ist die erste Schalteinrichtung (S1) und die zweite Schalteinrichtung (S2) jeweils aus einem oder mehreren RS-Flip-Flops aufgebaut, die C-MOS-Schalter schalten, so kann die Einschalterkennung als ein Kondensator ausgeführt sein und der Ausgang der Einschalterkennung an den R-Eingang oder die R-Eingänge der RS-Flip-Flops angeschlossen sein.

Zur Erkennung der Änderung der Betriebsart des Fahrzeugs, die z. B. durch eine Beschleunigung des Fahrzeugs bestimmt ist, weist die erfindungsgemäße Einrichtung eine zweite Klemme (B) auf, die zum einen elektrisch leitend mit einem Beschleunigungssignalgeber verbunden ist und zum anderen mit einem Schwellwertschalter (SW) verbunden ist. Bei einem überschreiten des vorgegebenen Schwellwertes liegt an dem Ausgang des Schwellwertschalters (SW) ein Signal an, das zum einen über eine elektrisch leitende Verbindung das erste Zeitglied (ZG1) und das zweite Zeitglied (ZG2) zurücksetzt und zum anderen auf eine dritte Klemme (ST) gegeben wird. Das an der Klemme (ST) anliegende Signal wirkt als Rücksetzsignal auf die erste Schalteinrichtung (S1) und die zweite Schalteinrichtung (S2) und den Speicher (SP). Für die Dauer des überschreitens des Schwellwertes ist somit die direkte Ausgabe des Differenzsignals vom Differenzbildner (D) an die Stelleinrichtung eingeschaltet. Bei Unterschreiten des Schwellwertes wird das Rücksetzsignal am Ausgang des Schwellwertschalters (SW) abgeschaltet, damit die erfindungsgemäße Einrichtung wieder den normalen Ablauf der Regelung einleiten kann. Die kürzeste Filterzeitkonstante wird dabei eingeschaltet.

Der Schwellwertschalter (SW) kann dabei über ein Zeitglied verfügen, damit erst nach einer vorgegebenen Zeit nach dem überschreiten des Schwellwertes ein Rücksetzen der erfindinngsgemäßen Einrichtung und eine direkte Ausgabe des Differenzsignals erfolgt.

Um das abgespeicherte Differenzsignal oder das Differenzsignal vom Differenzbildner (D) an die Stelleinrichtung weiterleiten zu können, ist der Ausgang der zweiten Schalteinrichtung (S2) mit einem ersten Eingang eines Komparators (K) verbunden. Um an dem Ausgang des Komparators (K) ein Ausgangssignal mit konstantem Puls-Periodenverhältnis zu erzeugen, ist der zweite Eingang des Komparators (K) mit einem zweiten Taktsignalgeber (T2) verbunden. Der zweite Taktsignalgeber (T2) liefert ein Sägezahnsignal oder ein Sinussignal. An dem ersten Eingang des Komparators (K) liegt währenddessen das Differenzsignal von der zweiten Schalteinrichtung (S2) konstant an.

Der Ausgang des Komparators (K) ist elektrisch leitend mit einem Filter (FI) verbunden. Um eventuell auftretende Störungen des von dem Komparator (K) kommenden Ausgangssignals herauszufiltern, wirkt der Filter (FI) als Gleichrichter. Der Filter (FI) ist elektrisch leitend mit einem oder mehreren Lageregelkreisen (L) verbunden, über die die Leuchtweite oder das Niveau des Fahrzeugs eingestellt wird. Um eine einfache und kostengünstige Realisierung der erfindungsgemäßen Einrichtung zu ermöglichen, können das erste Zeitglied (ZG1) und das zweite Zeitglied (ZG2) mit deren Unterzeitgliedern als Zähler ausgebildet sein. Aus dem gleichen Grund können der Differenzbildner (D), der Spannungs-Frequenzumsetzer (SF) der Frequenzteiler (FT), der Zähler (Z), der Speicher (SP), die zweite Schalteinrichtung (S2), der zweite Taktsignalgeber (T2), der Komparator (K); die Einschalterkennung (E), der erste Taktsignalgeber (T1), das erste Zeitglied (ZG1), das zweite Zeitglied (ZG2) und die erste Schalteinrichtung (S1) teilweise oder ganz in einem Mikroprozessor zusammengefaßt sein.

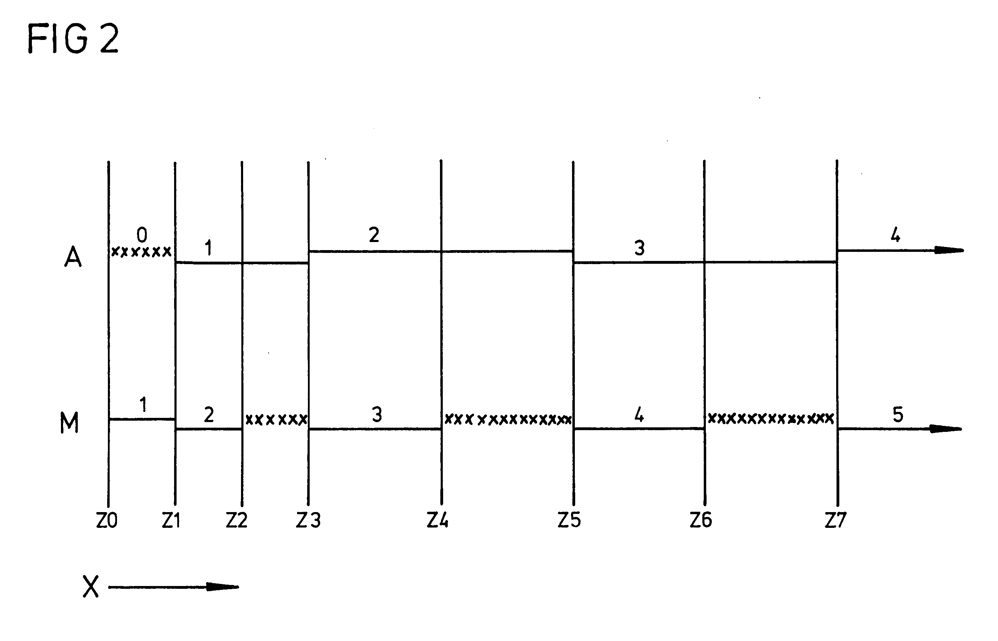

Im folgenden wird kurz anhand der Figur 2 unter Zuhilfenahme der in Figur 1 dargestellten Einrichtung an einem einfachen Beispiel der Ablauf des erfindungsgemäßen Verfahrens erläutert.

Figur 2 zeigt beispielhaft ein Ablaufdiagramm des erfindungsgemäßen Verfahrens nach Anspruch 1.

Der mit dem Buchstaben X gekennzeichnete Pfeil gibt den zeitlichen Ablauf des Verfahrens und der Verfahrensschritte an. Die einzelnen Zeiten sind mit den Buchstabenzahlenkombinationen (Z0, Z1, Z2, ...) gekennzeichnet. Zu jeder Zeit (Z0, Z1, Z2, ...) und jedem Zeitabschnitt ist aufgetragen, ob und welche Ausgabe, gekennzeichnet durch die Buchstabenzahlenkombinationen (A0, A1, A2, ...), erfolgt und ob eine Mittelung und welche Mittelung, gekennzeichnet durch die Buchstabenzahlenkombinationen (M1, M2, M3 ...), durchgeführt wird.

Zu dem Zeitpunkt (Z0) wird die erfindungsgemäße Einrichtung z. B. durch ein positives Potential an der ersten Klemme (H), das durch ein Einschalten der Beleuchtungsanlage oder ein Einschalten der Zündung des Fahrzeugs entsteht, über die Einschalteinrichtung (E) eingeschaltet. Die erste Schalteinrichtung (S1) schaltet dabei das erste Zeitglied (ZG1) auf die kürzeste Filterzeitkonstante und die zweite Schalteinrichtung (S2) schaltet das Differenzsignal vom Differenzbildner (D) direkt auf den Ausgang der zweiten Schalteinrichtung, der mit dem Komparator (K) verbunden ist, um das Differenzsignal direkt auf die Stelleinrichtung zu geben.

Bis zum Ablauf der ersten Filterzeitkonstante, das heißt dem Zeitpunkt (Z1) auf der Zeitskala, erfolgt eine direkte Ausgabe (A0) des Differenzsignals an die Stelleinrichtung. Gleichzeitig wird über die erste Filterzeitkonstante die Mittelung (M1) vorgenommen, die zum Zeitpunkt (Z1), das heißt mit Ablauf der Filterzeitkonstante abgeschlossen ist.

Zu dem Zeitpunkt (Z1) wird die zweite Schalteinrichtung (S2) von dem ersten Zeitglied (ZG1) angesteuert und schaltet die direkte Ausgabe ab und schaltet auf die Ausgabe des gespeicherten Differenzsignals. Der Speicher (SP) wird auf Ausgabe geschaltet und gleichzeitig werden das erste Zeitglied (ZG1) und das zweite Zeitglied (ZG2) zurückgesetzt, so daß die kürzeste Filterzeitkonstante noch einmal ablaufen kann.

Ab dem Zeitpunkt (Z1) erfolgt somit die Ausgabe (A1) der Mittelung (M1). Gleichzeitig erfolge die Mittelung (M2) über diese erste kürzeste Filterzeitkonstante. Nach Ablauf dieser Filterzeitkonstante zu der Zeit (Z2) erhält der Zähler (Z) von dem ersten Zeitglied (ZG1) ein Signal, wodurch das Zählen beendet wird und die Durchführung der Mittelung abgeschlossen wird. Die Ausgabe (A1) wird jedoch fortgesetzt bis die durch das zweite Zeitglied (ZG2) bestimmte Verzögerungszeit, die hier der ersten Filterzeitkonstante entspricht, abgelaufen ist, woraufhin von dem zweiten Zeitglied (ZG2) ein Signal an den Speicher (SP) zum Beginn der Ausgabe (A2) gegeben wird. Dies entspricht dem Zeitpunkt (Z3). Gleichzeitig wird von dem zweiten Zeitglied (ZG2) die erste Schalteinrichtung (S1) angesteuert, die wiederum das erste Zeitglied (ZG1) derart ansteuert, daß die nächst längere Filterzeitkonstante eingeschaltet wird.

Von dem Zeitpunkt (Z2) bis zum Zeitpunkt (Z3) wird somit die Mittelung ausgesetzt. Ab dem Zeitpunkt (Z3) erfolgt die Ausgabe (A2) der Mittelung (M2) und gleichzeitig erfolgt die Mittelung (M3). Zwischen dem Zeitpunkt (Z4) und dem Zeitpunkt (Z5) wird wiederum die Mittelung ausgesetzt, während die Ausgabe (A2) fortgesetzt wird.

Bei dem hier ausgeführten Ausführungsbeispiel verfügt das erste Zeitglied (ZG1) lediglich über zwei erste Unterzeitglieder, so daß neben der direkten Ausgabe nur zwei Filterzeitkonstanten eingeschaltet werden können. Aus diesem Grund wird zum Zeitpunkt (Z5) keine nächst höhere Filterzeitkonstante eingeschaltet, sondern die Einrichtung verbleibt bei der längst möglichen Filterzeitkonstante. Die Ausgabe (A3) der Mittelung (M3) erfolgt somit über die längste Filterzeitkonstante plus die durch das zweite Zeitglied (ZG2) vorgegebene Verzögerungszeit bis zum Zeitpunkt (Z7). Die Mittelung (M4) erfolgt vom Zeitpunkt (Z5) bis zum Zeitpunkt (Z6) und wird vom Zeitpunkt (Z6) bis zum Zeitpunkt (Z7) ausgesetzt. Dieser aufgeführte Verfahrensablauf wiederholt sich dann fortwährend. Die erste Filterzeitkonstante kann hier beispielhaft etwa 8 Sekunden betragen, während die zweite Filterzeitkonstante hier beispielhaft etwa 16 Sekunden betragen kann. Die Filterzeitkonstanten können dabei auch kleiner oder größer gewählt werden und somit je nach den Anforderungen eingestellt werden. Bei einem anderen Ausführungsbeispiel können das erste Zeitglied (ZG1) und das zweite Zeitglied (ZG2) über eine größere Anzahl erster und zweiter Unterzeitglieder verfügen, so daß die Abstufungen kleiner gewählt werden können, und eine genauere Regelung erreicht wird. Es ist dabei möglich, daß die kürzeste Filterzeitkonstante dem Abstand der Taktsignale von dem ersten Taktsignalgeber (T1) entspricht. Es ist dabei auch möglich, daß durch das zweite Zeitglied (ZG2) die Mittelung nicht ausgesetzt wird, so daß die Ausgabe und die Mittelung kontinuierlich erfolgen und somit eine in etwa dynamische Regelung der Leuchtweite oder des Niveaus des Fahrzeugs erreicht wird. Nach einer vorgegebenen Betriebsdauer des Fahrzeugs oder der Beleuchtungsanlage wird dabei jeweils die längste Filterzeitkonstante eingeschaltet und das Verfahren mit dieser längsten Filterzeitkonstante fortgesetzt, falls nicht eine Änderung der Betriebsart des Fahrzeugs erfolgt.

Die Änderung der Betriebsart kann dabei eine positive und/oder negative Beschleunigung des Fahrzeugs sein. Die Änderung der Betriebsart des Fahrzeugs kann auch durch den Wechsel zwischen Fahrt und Stand des Fahrzeugs vorgegeben sein. Sie kann durch das Öffnen und Schließen der Türen und/oder Klappen des Fahrzeugs vorgegeben sein oder aber auch durch das Betätigen eines Schalters durch den Fahrzeugführer vorgebbar sein.

Bei jeder dieser Änderung der Betriebsart des Fahrzeugs wird über die erste Schalteinrichtung (S1) die kürzeste Filterzeitkonstante aktiviert und über die zweite Schalteinrichtung (S2) das Differenzsignal direkt auf den Ausgang der zweiten Schalteinrichtung geschaltet, die mit der Stelleinrichtung verbunden ist. Das Verfahren wird dabei solange auf dem Zeitpunkt (Z0) festgehalten, bei dem eine direkte Ausgabe des Differenzsignals an die Stelleinrichtung erfolgt, jedoch keine Mittelung durchgeführt wird, bis wiederum eine Änderung der Betriebsart des Fahrzeugs eintritt. Dies wäre z. B. das Schließen aller Türen und/oder Klappen des Fahrzeugs oder die Aufnahme der Fahrt des Fahrzeugs. Ist die Änderung der Betriebsart des Fahrzeugs durch eine positive und/oder negative Beschleunigung des Fahrzeugs vorgegeben, so ist es erforderlich, damit nicht bei jeder Beschleunigung die Einrichtung auf die direkte Ausgabe umgeschaltet wird, daß für die positive und/oder negative Beschleunigung ein Schwellwert überschritten werden muß, bevor die direkte Ausgabe des Differenzsignals erfolgt. Zusätzlich kann es erforderlich sein, daß der Schwellwert über eine vorgegebene Zeit überschritten werden muß, bevor eine Umschaltung auf die direkte Ausgabe erfolgt. Auch für diesen Fall werden die Einrichtung und das Verfahren auf dem Zeitpunkt (Z0) festgehalten, bis der Schwellwert unterschritten wird. Danach erfolgt der Ablauf des Verfahrens wie oben beschrieben.

Das gefilterte Differenzsignal liegt bei der Ausgabe als konstanter Wert an dem Ausgang der zweiten Schalteinrichtung (S2) an. Dieses konstante Ausgangssignal wird mit einem sich periodisch ändernden Signal verglichen, das hier beispielsweise ein Sägezahnsignal ist, so daß man nach dem Vergleich der beiden Signale ein Ausgangssignal erhält, das ein konstantes Puls-Periodenverhältnis aufweist. Dieses Signal wird gefiltert, wobei die Filterung aus einer Gleichrichtung besteht, die durchgeführt wird, um eventuelle Störungen aus dem Signal zu eliminieren.

Nach der Filterung wird das gefilterte Signal einem oder mehreren Lageregelkreisen (L) zugeführt, die einen oder mehrere Motoren ansteuern, die in Stellelementen enthalten sind, wobei die Stellelemente eine Änderung der Lage der Scheinwerfer oder des Niveaus der Karosserie des Fahrzeugs herbeiführen.

Der von dem ersten Taktsignalgeber (T1) erzeugte Takt der den Zeitgliedern zugeführt wird, weist hier beispielhaft einen Abstand von 0,25 Sekunden auf. Der von dem zweiten Taktsignalgeber (T2) erzeugte Takt, der an den Komparator (K) weitergegeben wird, weist hier beispielhaft einen Abstand von einer Millisekunde auf. Diese Taktzeiten lassen sich je nach den Anforderungen, die an das Verfahren und die Einrichtung zur Durchführung des Verfahrens gestellt werden, nach oben und unten verändern.

Man erhält somit ein erfindungsgemäßes Verfahren und eine Einrichtung zur Durchführung dieses Verfahrens, bei dem jeweils auf einfache und kostengünstige Weise eine bestmögliche Anpassung der Regelung der Leuchtweite oder des Niveaus des Fahrzeugs an die Betriebsdauer oder an Änderungen der Betriebsart des Fahrzeugs erreicht wird und die Sicherheit bei dem Betrieb des Fahrzeugs heraufgesetzt wird.

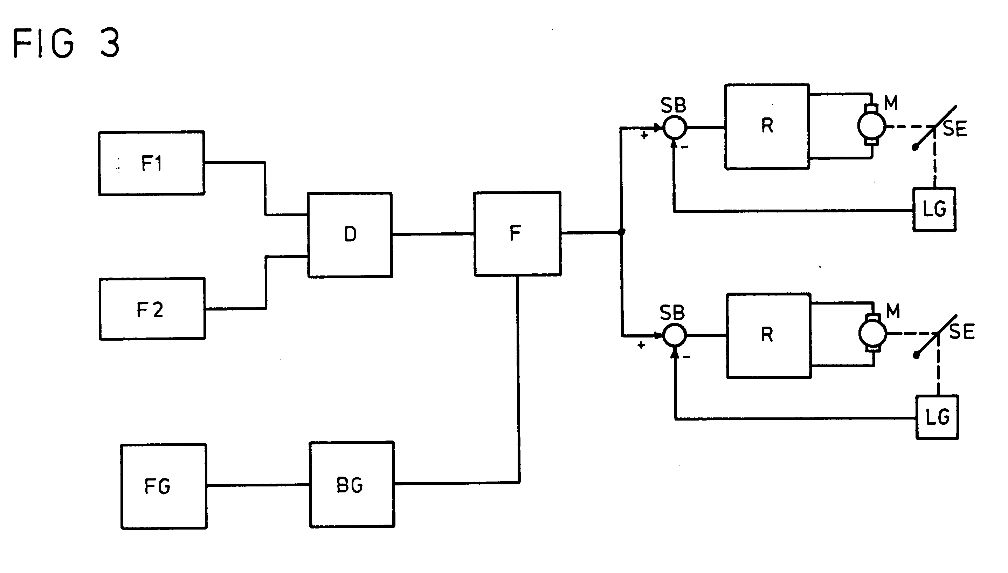

Figur 3 zeigt ein Blockschaltbild einer erfindungsgemäßen Einrichtung zur Durchführung des Verfahrens gemäß Anspruch 20.

Wie auch schon unter Figur 1 beschrieben, sind ein erster Fühler (F1) und ein zweiter Fühler (F2) elektrisch leitend mit einem Differenzbildner (D) verbunden. Der erste Fühler (F1) kann dabei an der Vorderachse und der zweite Fühler (F2) an der Hinterachse des Kraftfahrzeugs angeordnet sein.

Der erste Fühler (F1) liefert dabei ein Signal, das der Stellung der Fahrzeugkarosserie zu der Vorderachse proportional ist. Der zweite Fühler (F2) liefert ein Signal, das der Stellung der Fahrzeugkarosserie zu der Hinterachse proportional ist. Der Differenzbildner (D) erzeugt aus diesen anstehenden Signalen ein Differenzsignal, daß zur Ansteuerung von Stelleinrichtungen geeignet ist, die Stellelemente (SE) zum Verstellen der Leuchtweite oder des Niveaus des Fahrzeugs verstellen.

Dem Differenzbildner (D) ist hier ein Filter (F) nachgeschaltet, der einen Mittelwertbildner aufweist, der es ermöglicht, die Stelleinrichtungen immer erst nach einer vorgegebenen veränderlichen Filterzeitkonstante mit einem neuen konstanten Stellsignal anzusteuern, wodurch die Lebensdauer der Stelleinrichtungen und der Stellelemente (SE) erhöht wird.

Damit die Filterzeitkonstante in Abhängigkeit von Änderungen der Betriebsart des Fahrzeugs verändert werden kann, ist der Filter (F) elektrisch leitend mit einem Beschleunigungsgeber (BG) verbunden, der wiederum elektrisch leitend mit einem Fahrgeschwindigkeitsgeber (FG) verbunden ist.

Der Fahrgeschwindigkeitsgeber (FG) liefert dem Beschleunigungsgeber (BG) ein Signal, das der Fahrgeschwindigkeit des Fahrzeugs proportional ist. Das Fahrgeschwindigkeitssignal kann dabei durch eine mechanische Einrichtung oder aber auch durch eine elektronische Einrichtung gebildet werden. Der Beschleunigungsgeber (BG) weist einen Differenzierer auf, der aus dem Fahrgeschwindigkeitssignal ein Beschleunigungssignal bildet. Dieses Beschleunigungssignal wird dem Filter (F) zugeführt, der z. B. einen Speicher aufweist, der in Abhängigkeit von den anstehenden Beschleunigungssignalen von dem Beschleunigungsgeber (BG) kontinuierlich oder in vorgegebenen Schritten die wirksam werdenden Filterzeitkonstanten einschaltet. Der Speicher kann dabei auch für die anstehenden Beschleunigungssignale jeweils eine Anzahl Werte abgespeichert haben, über die bei der jeweilig anstehenden Beschleunigung gemittelt wird, wodurch die Filterzeitkonstanten festgelegt werden.

Der Ausgang des Filters (F) ist hier elektrisch leitend beispielhaft mit zwei Stelleinrichtungen verbunden, die jeweils aus einem Subtrahierer (SB), einem Regler (R), einem Motor (M), einem Stellelement (SE) und einem Lagesignalgeber (LG) aufgebaut sind. Bei anderen Ausführungsbeispielen kann der Ausgang des Filters (F) auch mit einer größeren Anzahl Stelleinrichtungen verbunden sein. Jede Stelleinrichtung weist dabei den folgenden Aufbau auf. Das von dem Filter (F) gebildete Signal wird dem Subtrahierer (SB) zugeführt. Dieses Signal weist hier beispielhaft ein positives Vorzeichen auf. Der Subtrahierer (SB) ist elektrisch leitend mit einem Regler verbunden, der einen Motor (M) ansteuert. Der Motor (M) ist, wie in Figur 3 durch eine gestrichelte Linie angedeutet ist, mit einem Stellelement (SE) verbunden, das entsprechend der Ansteuerung des Motors (M) durch den Regler (R) in seiner Lage verstellt wird. Zur Erkennung der genauen Lage des Stellelements (SE) ist das Stellelement (SE), wie hier durch eine gestrichelte Linie gekennzeichnet ist, mit einem Lagesignalgeber (LG) verbunden, der z. B. ein Potentiometer sein kann, der aber auch als eine Zählschaltung für die Bewegung des Motors (M) oder des Stellelements (SE) ausgebildet sein kann. Der Lagesignalgeber (LG) ist dabei elektrisch leitend mit dem Subtrahierer verbunden, so daß ein geschlossener Lageregelkreis gebildet wird. Das Signal von dem Lagesignalgeber (LG) wird hier beispielhaft mit negativem Vorzeichen dem Subtrahierer (SB) zugeführt.

Im folgenden wird kurz unter Zuhilfenahme von Figur 3 das Verfahren zur Regelung der Leuchtweite oder des Niveaus eines Fahrzeugs gemäß Anspruch 16 beschrieben.

Nach dem erstmaligen Inbetriebsetzen des Fahrzeugs liefern der erste Fühler (F1) und der zweite Fühler (F2) dem Differenzbildner (D) Signale, die von der Stellung der Fahrzeugkarosserie zu der Vorderachse und der Hinterachse abhängen. Bei dem Inbetriebsetzen des Fahrzeugs befindet sich das Fahrzeug in der Regel im Stand, das heißt, die Beschleunigung ist gleich Null. Von dem Beschleunigungsgeber (BG) wird dem Filter (F) daher ein entsprechendes Signal zugeführt. Entsprechend diesem Signal von dem Beschleunigungsgeber (BG) wird von dem Filter (F) eine Filterzeitkonstante eingeschaltet, die einen vorgegebenen Grenzwert aufweist, das heißt, bei dieser Betriebsart des Fahrzeugs ist die größte Filterzeitkonstante eingeschaltet. Diese Filterzeitkonstante kann beispielhaft etwa 1 Sekunde betragen, sie kann aber auch einige wenige Sekunden betragen. Damit ist gewährleistet, daß z. B. bei einem Beladungsvorgang im Stand des Fahrzeugs die Leuchtweite oder das Niveaus des Fahrzeugs mit einer ausreichenden Schnelligkeit nachgeregelt wird. Wird das Fahrzeug in Bewegung gesetzt, so wird aufgrund des Fahrgeschwindigkeitssignals von dem Fahrgeschwindigkeitsgeber (FG) durch den Beschleunigungsgeber (BG) ein Beschleunigungssignal gebildet, in Abhängigkeit dessen der Filter (F) die Filterzeitkonstanten verändert. Die Filterzeitkonstante wird dabei mit zunehmender positiver und mit zunehmender negativer Beschleunigung des Fahrzeugs kontinuierlich oder diskontinuierlich auf kürzere Zeiten verkleinert und mit abnehmender positiver und mit abnehmender negativer Beschleunigung kontinuierlich oder diskontinuierlich auf längere Zeiten erhöht. Es wird somit gewährleistet, daß bei sehr starken Beschleunigungen, die meist bei niedrigen Fahrgeschwindigkeiten und insbesondere bei dem Anfahren und dem Abbremsen des Fahrzeugs auftreten, die Filterzeitkonstante einen sehr kleinen Wert annimmt, der sicherstellt, daß die relative Bewegung der Fahrzeugkarosserie zu den Radachsen schnell und sicher ausgeglichen wird und die Leuchtweite derart schnell und sicher geregelt wird, daß es weder zu einer Blendung des Gegenverkehrs noch zu einer Einschränkung der Sichtweite kommt. Bei nur kleinen Beschleunigungen, die auch nur geringe Bewegungen der Fahrzeugkarosserie zu den Radachsen bewirken können, werden längere Filterzeitkonstanten eingeschaltet, so daß die Zeit zum Nachregeln der Stellelemente (SE) länger ist, was zu einer Erhöhung der Lebensdauer der Stellelemente (SE) und der gesamten Stelleinrichtung beiträgt.

Die Veränderung der Filterzeitkonstante mit der Änderung der Beschleunigung des Fahrzeugs kann dabei kontinuierlich erfolgen, sie kann aber auch in Stufen erfolgen. Eine besonders einfache Ausführungsform ergibt sich, wenn vorgegebenen Bereichen positiver und negativer Beschleunigung je eine Filterzeitkonstante zugeordnet wird. Die Filterzeitkonstanten können dabei in einem Kennfeldspeicher abgelegt sein. Das Verfahren weist eine besonders einfache Ausführungsform auf, wenn beginnend mit einer Beschleunigung gleich Null bei einer zunehmenden und einer abnehmenden positiven oder negativen Beschleunigung bei dem überschreiten vorgegebener Beschleunigungsstufen die Filterzeitkonstante um einen vorgegebenen Faktor erhöht oder erniedrigt wird, so daß der Filter in einfacher und kostengünstiger Ausführung lediglich über Schwellwerterkennungseinrichtungen verfügen muß, die in Abhängigkeit von den anstehenden Beschleunigungssignalen Schalteinrichtungen betätigen, die die Filterzeitkonstante um einen jeweils vorgegebenen Faktor verändert.

Bei einem anderen oder ergänzenden vorteilhaften Ausführungsbeispiel kann dabei die Filterzeitkonstante derart bestimmt werden, daß in Abhängigkeit von den anstehenden Beschleunigungssignalen die Anzahl der Werte variiert wird, über die gemittelt wird, so daß bei jeder Veränderung der Beschleunigungssignale von dem Beschleunigungsgeber die Filterzeitkonstante kontinuierlich oder diskontinuierlich in Abhängigkeit des Beschleunigungssignals verändert werden kann.

Bei einer solchen Ausführungsform ergibt sich der zu bildende Mittelwert (Mittelwert (k)) aus der Anzahl

EP 0 355 539 B1

(n) der Werte, über die gemittelt wird, dem ungefilteren Differenzsignal und dem zuvor gebildeten Mittelwert (Mittelwert (k-1)) gemäß der folgenden Rekursionsformel:

$$\text{Mittelwert (k)} = \frac{(n-1) \times \text{Mittelwert (k-1)} + \text{ungefilteter Differenzwert}}{n}$$

Der Mittelwert (Mittelwert (k)) liegt an dem Ausgang des Filters (F) an und steuert direkt die Steuereinrichtungen an.

**Patentansprüche**

1. Verfahren zur Regelung der Leuchtweite oder des Niveaus eines Fahrzeugs, insbesondere eines Kraftfahrzeugs, bei dem an mindestens einer Stelle der Vorderachse und der Hinterachse Signale gemessen werden, die von der relativen Stellung der Fahrzeugkarosserie zu der Vorderachse und der Hinterachse abhängen, bei dem eine Differenzbildung der Signale von der Vorderachse zu denen von der Hinterachse durchgeführt wird, bei dem die sich ergebenden Differenzsignale durch Mittelwertbildung gefiltert wird, wobei die Mittelwertbildung in einem festgelegten Zeitabstand erfolgt und bei dem Stellelemente angesteuert werden, wenn das gefilterte Differenzsignal von einem voreingegebenen oder zuvor eingestellten Wert abweicht, dadurch gekennzeichnet, daß der festgelegte Zeitabstand und die Zeit, über die gemittelt wird, durch eine vorgegebene veränderliche Filterzeitkonstante bestimmt ist und daß mit fortschreitender Betriebsdauer nach einem Start oder einem Einschalten der Beleuchtungsanlage oder eine Änderung der Betriebsart des Fahrzeugs die Filterzeitkonstante von kürzeren Zeiten auf längere Zeiten erhöht wird.

2. Verfahren nach Anspruch 1, dadurch gekennzeichnet, daß nach der Differenzbildung der Signale von der Vorderachse und der Hinterachse eine Spannungs-Frequenzumsetzung erfolgt und daß die Filterung aus einer Zählung, Aufsummierung und Speicherung des Differenzsignals besteht, wobei die Zählung über die jeweils wirksame Filterzeitkonstante erfolgt und daß die jeweils wirksame Filterzeitkonstante aus einem Taktsignal durch Teilung oder Multiplikation abgeleitet wird.

3. Verfahren nach Anspruch 2, dadurch gekennzeichnet, daß die Zählung durch eine Teilung der Frequenz des Differenzsignals vor der Zählung beeinflußt wird, die von der jeweils wirksamen Filterzeitkonstante abhängt und daß nach Ablauf der jeweils wirksamen Filterzeitkonstante die Zählung beendet wird und das aufsummierte, gespeicherte Differenzsignal ausgegeben wird.

4. Verfahren nach Anspruch 3, dadurch gekennzeichnet, daß nach Ablauf einer Filterzeitkonstante die nächstlängere Filterzeitkonstante wirksam geschaltet wird, daß die Ausgabe des aufsummierten, gespeicherten Differenzsignals nach abgeschlossener Zählung um die jeweils wirksame Filterzeitkonstante verzögert erfolgt und daß das aufsummierte, gespeicherte Differenzsignal als konstanter Wert ausgegeben wird, bis nach dem Ablauf der Filterzeitkonstante und der durch die Filterzeitkonstante bestimmten Verzögerung ein neues gespeichertes Differenzsignal ausgegeben wird.

5. Verfahren nach Anspruch 4, dadurch gekennzeichnet, daß bei einem Start oder bei einem Einschalten der Beleuchtungsanlage oder bei einer Änderung der Betriebsart des Fahrzeugs die kürzeste Filterzeitkonstante oder eine kürzere Filterzeitkonstante als die jeweils wirksame Filterzeitkonstante eingeschaltet wird und daß das Differenzsignal bei dem Einschalten der kürzesten Filterzeitkonstante unter Umgehung der Filterung direkt ausgegeben wird und daß nach dem Ablauf dieser Filterzeitkonstante, während der gleichzeitig eine Filterung erfolgte, dieselbe Filterzeitkonstante noch einmal eingeschaltet wird und gleichzeitig eine Ausgabe des gefilterten, gespeicherten Differenzsignals erfolgt.

6. Verfahren nach Anspruch 5, dadurch gekennzeichnet, daß eine Änderung der Betriebsart des Fahrzeugs durch einen vorgegebenen Schwellwert für eine negative Beschleunigung des Fahrzeugs oder durch einen vorgegebenen Schwellwert für eine positive Beschleunigung des Fahrzeugs bestimmt ist, daß nach überschreiten der Schwellwerte ein Abschalten der direkten Ausgabe erst erfolgt, wenn die Schwellwerte unterschritten werden und daß die direkte Ausgabe erst dann erfolgt, wenn die Schwell-

12

werte über eine vorgegebene Zeit überschritten werden.

7. Verfahren nach Anspruch 6, dadurch gekennzeichnet, daß das ausgegebene Differenzsignal mit einem periodisch sich ändernden Signal verglichen wird, daß das periodisch sich ändernde Signal ein Sägezahnsignal oder ein Sinussignal ist, daß die Information des Signals nach dem Vergleich in dem Flankenabstand des entstandenen Puls-Periodenverhältnisses liegt, und daß das nach dem Vergleich vorliegende, ein Puls-Periodenverhältnis aufweisende Signal gefiltert wird und einem Lageregelkreis zur Einstellung der Scheinwerfer zugeführt wird.

8. Verfahren nach Anspruch 7, dadurch gekennzeichnet, daß die Filterung eine Gleichrichtung des Signals ist.

9. Einrichtung zur Regelung der Leuchtweite oder des Niveaus eines Fahrzeugs, insbesondere eines Kraftfahrzeugs, mit einem ersten Fühler an der vorderen Radachse mit einem zweiten Fühler an der hinteren Radachse, deren Ausgangssignale von der relativen Stellung der Karosserie des Fahrzeugs zu den Radachsen abhängen, mit einem Differenzbildner, der die Differenz der Signale von der Vorderachse zu denen von der Hinterachse bildet, mit einem Filter, der einen Mittelwertbildner aufweist und der mit einem ersten Zeitglied verbunden ist, das den Zeitabstand der Mittelwertbildung festlegt, und mit einer Stelleinrichtung, die Stellelemente zum Einstellen von Scheinwerfern oder des Niveaus eines Fahrzeugs aufweist, dadurch gekennzeichnet, daß ein erster Taktsignalgeber (T1) mit einem ersten Zeitglied (ZG1) verbunden ist, daß das erste Zeitglied (ZG1) über eine vorgegebene Anzahl aufeinanderfolgende erste Unterzeitglieder verfügt, daß die ersten Unterzeitglieder Filterzeitkonstanten vorgeben, die in der Aufeinanderfolge der ersten Unterzeitglieder ansteigen, daß die ersten Unterzeitglieder mit einer ersten Schalteinrichtung (S1) verbunden sind, daß die erste Schalteinrichtung (S1) Schalter aufweist, die mit den ersten Unterzeitgliedern verbunden sind und daß die ersten Unterzeitglieder des ersten Zeitglieds (ZG1) elektrisch leitend mit dem Filter verbunden sind.

10. Einrichtung nach Anspruch 9, dadurch gekennzeichnet, daß der erste Fühler (F1) und der zweite Fühler (F2) mit dem Differenzbildner (D) verbunden sind, daß der Differenzbildner (D) zum einen direkt mit einer zweiten Schalteinrichtung (S2) verbunden ist und zum anderen über einen Spannungs-Frequenzumsetzer (SF), einen Frequenzteiler (FT), einen Zähler (Z) und einen Speicher (SP) mit der zweiten Schalteinrichtung (S2) verbunden ist und daß die erste Schalteinrichtung (S1) elektrisch leitend mit dem Frequenzteiler (FT) verbunden ist und daß der Frequenzteiler (FT) eine Anzahl Frequenzteilerstufen aufweist, die der Anzahl der Schalter der ersten Schalteinrichtung (S1) und der Anzahl der Unterzeitglieder des ersten Zeitgliedes (ZG1) entspricht.

11. Einrichtung nach Anspruch 10, dadurch gekennzeichnet, daß ein zweites Zeitglied (ZG2) zwischen dem ersten Zeitglied (ZG1) und der Schalteinrichtung (S1) angeordnet ist, daß das zweite Zeitglied (ZG2) mit dem Speicher (SP) verbunden ist, daß das zweite Zeitglied (ZG2) über eine vorgegebene Anzahl aufeinanderfolgende oder parallel wirkende zweite Unterzeitglieder verfügt, die kleiner oder gleich der Anzahl der ersten Unterzeitglieder des ersten Zeitglieds (ZG1) sind und daß das zweite Zeitglied (ZG2) einen Rücksetzausgang (RST) aufweist, der elektrisch leitend mit dem ersten Zeitglied (ZG1) und dem zweiten Zeitglied (ZG2) verbunden ist.

12. Einrichtung nach Anspruch 11, dadurch gekennzeichnet, daß eine erste Klemme (H) mit einer Einschalterkennung (E) verbunden ist, daß die Einschalterkennung (E) mit Rücksetzeingängen der ersten Schalteinrichtung (S1) und der zweiten Schalteinrichtung (S2) verbunden ist und daß die erste Klemme (H) mit der Klemme 15 oder der Klemme 56 des Fahrzeugs verbunden ist, daß die zweite Klemme (B) mit einem Beschleunigungssignalgeber verbunden ist, daß die zweite Klemme (B) elektrisch leitend mit einem Schwellwertschalter (SW) verbunden ist und daß der Schwellwertschalter (SW) elektrisch leitend mit den Rücksetzeingängen des ersten Zeitglieds (ZG1), des zweiten Zeitglieds (ZG2), der ersten Schalteinrichtung (S1), der zweiten Schalteinrichtung (S2), des Zählers (Z) und des Speichers (SP) verbunden ist und daß der Schwellwertschalter (SW) ein Zeitglied enthält.

13. Einrichtung nach Anspruch 12, dadurch gekennzeichnet, daß ein Ausgang der zweiten Schalteinrichtung (S2) mit einem ersten Eingang eines Komparators (K) verbunden ist, daß ein zweiter Taktsignalgeber (T2) mit dem zweiten Eingang des Komparators (K) verbunden ist, daß der Ausgang des Komparators (K) mit einem Filter (FI), daß der Filter (FI) mit einem oder mehreren Lageregelkreisen (L) verbunden ist

EP 0 355 539 B1

und daß der zweite Taktsignalgeber (T2), ein Sägezahnsignal oder ein Sinussignal erzeugt.

14. Einrichtung nach Anspruch 13, dadurch gekennzeichnet, daß die erste Schalteinrichtung (S1) und die zweite Schalteinrichtung (S2) als RS-Flip-Flops ausgebildet sind, die mit C-MOS-Schaltern wirkverbunden sind und daß das erste Zeitglied (ZG1) und das zweite Zeitglied (ZG2) und deren Unterzeitglieder als Zähler ausgebildet sind.

15. Einrichtung nach Anspruch 14, dadurch gekennzeichnet, daß der Differenzbildner (D), der Spannungs-Frequenzumsetzer (SF), der Frequenzteiler (FT), der Zähler (Z), der Speicher (SP), die zweite Schalteinrichtung (S2), der zweite Taktsignalgeber (T2), der Komparator (K), die Einschalterkennung (E), der erste Taktsignalgeber (T1), das erste Zeitglied (ZG1), das zweite Zeitglied (ZG2) und die erste Schalteinrichtung (S1) teilweise oder ganz in einem Mikroprozessor zusammengefaßt sind.

16. Verfahren zur Regelung der Leuchtweite oder des Niveaus eines Fahrzeugs, insbesondere eines Kraftfahrzeuges, bei dem an mindestens einer Stelle der Vorderachse und der Hinterachse Signale gemessen werden, die von der relativen Stellung der Fahrzeugkarosserie zu der Vorderachse und der Hinterachse abhängen, bei dem eine Differenzbildung der Signale von der Vorderachse zu denen von der Hinterachse durchgeführt wird, bei dem die sich ergebenden Differenzsignale durch Mittelwertbildung gefiltert wird, wobei die Mittelwertbildung in einem festgelegten Zeitabstand erfolgt, und bei dem Stellelemente angesteuert werden, wenn das gefilterte Differenzsignal von einem voreingegebenen oder zuvor eingestellten Wert abweicht, dadurch gekennzeichnet, daß der festgelegte Zeitabstand und die Zeit, über die gemittelt wird, durch eine vorgegebene, veränderliche Filterzeitkonstante bestimmt ist, daß die Filterzeitkonstante mit zunehmender positiver und zunehmender negativer Beschleunigung des Fahrzeugs kontinuierlich oder diskontinuierlich auf kürzere Zeiten verkleinert wird, daß die Filterzeitkonstante mit abnehmender positiver und mit abnehmender negativer Beschleunigung kontinuierlich oder diskontinuierlich auf längere Zeiten erhöht wird, und daß bei einer positiven und einer negativen Beschleunigung gleich Null die Filterzeitkonstante einen vorgegebenen Grenzwert aufweist.

17. Verfahren nach Anspruch 16, dadurch gekennzeichnet, daß vorgegebenen Bereichen positiver und negativer Beschleunigung je eine Filterzeitkonstante zugeordnet wird.

18. Verfahren nach Anspruch 17, dadurch gekennzeichnet, daß, beginnend mit einer Beschleunigung gleich Null, bei einer zunehmenden und einer abnehmenden positiven oder negativen Beschleunigung bei dem überschreiten vorgegebener Beschleunigungsstufen die Filterzeitkonstante um einen vorgegebenen Faktor erhöht oder erniedrigt wird.

19. Verfahren nach Anspruch 18, dadurch gekennzeichnet, daß die Filterzeitkonstante von der Anzahl der Werte, über die gemittelt wird, und der Abtastrate für das Differenzsignal abhängt.

20. Einrichtung zur Durchführung des Verfahrens nach Anspruch 16, mit einem ersten Fühler an der vorderen Radachse, mit einem zweiten Fühler an der hinteren Radachse, deren Ausgangssignale von der relativen Stellung der Karosserie des Fahrzeugs zu den Radachsen abhängen, mit einem Differenzbildner, der die Differenz der Signale von der Vorderachse zu denen von der Hinterachse bildet, mit einem Filter, der einen Mittelwertbildner aufweist, bei dem die Mittelwertbildung durch eine Filterzeitkonstante vorgegeben ist, und mit mindestens einer Stelleinrichtung, die Stellelemente zum Einstellen von Scheinwerfern oder des Niveaus eines Fahrzeugs aufweist, dadurch gekennzeichnet, daß der Filter (F) mit einem Beschleunigungsgeber (BG) verbunden ist, der mit einem Fahrgeschwindigkeitsgeber (FG) verbunden ist und daß der Filter (F) Mittel aufweist, die den Beschleunigungssignalen von dem Beschleunigungsgeber (BG) vorgegebene Filterzeitkonstanten zuweisen und einschalten.

21. Einrichtung nach Anspruch 20, dadurch gekennzeichnet, daß die Mittel durch mindestens einen Speicher gebildet werden, der den Beschleunigungssignalen eine Anzahl Werte, über die gemittelt wird, zuweist.

22. Einrichtung nach Anspruch 21, dadurch gekennzeichnet, daß der Filter (F) über je einen Subtrahierer (SB) mit je einem Regler (R) verbunden ist, der mit je einem Motor (M) zur Verstellung je eines Stellelements (SE) verbunden ist, und daß entsprechend der Lage jedes Stellelements (SE) von je einem Lagesignalgeber (LG) ein Lagesignal gebildet wird, daß dem jeweiligen Subtrahierer (SB)

14

EP 0 355 539 B1

zugeführt wird.

**Claims**

1. Method for controlling the headlight range or the level of a vehicle, more particularly a motor vehicle, where at at least one point of the front axle and of the rear axle signals are measured which depend on the relative position of the vehicle body to the front axle and the rear axle, where a differential is generated between the signals from the front axle and those from the rear axle, where the resulting differential signals are filtered by averaging them, the averaging taking place within a fixed time interval, and where final controlling elements are triggered if the filtered differential signal deviates from a programmed or previously set value, characterised in that the fixed time interval and the time for which averaging is performed is determined by a preset variable filtering time constant and that as the operating duration progresses after a start or switching-on of the lighting system or a change in the vehicle's operating mode, the filtering time constant is increased from shorter times to longer times.

2. Method according to claim 1, characterised in that after generation of the differential of the signals from the front axle and the rear axle a voltage-to-frequency conversion takes place, and that filtering consists in counting, totalising and storing the differential signal, the count being made over the respective effective filtering time constant, and that the respective effective filtering time constant is derived from a timing signal by division or multiplication.

3. Method according to claim 2, characterised in that the count is influenced by dividing the frequency of the differential signal prior to the count, which depends on the respective effective filtering time constant, and in that the count is terminated after expiry of the respective effective filtering time constant and the totalised stored differential signal is output.

4. Method according to claim 3, characterised in that after a filtering time constant expires, the next longest filtering time constant is effectively stored, that after the count has been terminated outputting of the totalised stored differential signal is delayed by the respective effective filtering time constant, and that the totalised stored differential signal is output as a constant value until a new stored differential signal is output after the expiry of the filtering time constant and of the delay determined by the filtering time constant.

5. Method according to claim 4, characterised in that in the event of a start or of switching-on of the lighting system or of a change in the vehicle's operating mode the shortest filtering time constant or a shorter filtering time constant than the respective effective filtering time constant is activated and that when the shortest filtering time constant is activated the differential signal is output direct, bypassing the filtering operation, and that after the expiry of this filtering time constant, during which filtering has simultaneously been taking place, said filtering time constant is activated once more and simultaneously the filtered, stored differential signal is output.

6. Method according to claim 5, characterised in that a change in the vehicle's operating mode is determined by a preset threshold value for a negative acceleration of the vehicle or by a preset threshold value for a positive acceleration of the vehicle, that once the threshold values are exceeded the direct output is only suspended if less than the threshold values are attained, and that direct outputting only takes place once the threshold values are exceeded over a predetermined period.

7. Method according to claim 6, characterised in that the output differential signal is compared with a periodically changing signal, that the periodically changing signal is a saw-tooth signal or a sinusoidal signal, that after the comparison the information from the signal is in the interval between edges of the resulting pulse/period ratio, and that the signal present after the comparison, incorporating a pulse/period ratio, is filtered and sent to a position servo loop for adjustment of the headlamps.

8. Method according to claim 7, characterised in that filtering means rectification of the signal.

9. Device for controlling the headlight range or the level of a vehicle, more particularly a motor vehicle, comprising a first sensor on the front wheel axle and a second sensor on the rear wheel axle, the output signals from which sensors depend on the relative position of the vehicle body to the wheel

15

axles, further comprising a differential generator which generates the differential between the signals from the front axle and those from the rear axle, and comprising a filter incorporating a mean value generator and linked to a first timing element which fixes the time interval at which the mean value is generated, and also comprising a final control device incorporating final control elements for adjusting headlamps or the level of a vehicle, characterised in that a first timing signal generator (T1) is linked to a first timing element (ZG1), that the first timing element (ZG1) has at its disposal a preset number of sequential first subtiming elements, that the first subtiming elements define filtering time constants which rise in sequence with the first subtiming elements, that the first subtiming elements are linked to a first switching device (S1), that the first switching device (S1) incorporates switches which are linked to the first subtiming elements, and that the first subtiming elements of the first timing element (ZG1) are linked electrically to the filter.

10. Device according to claim 9, characterised in that the first sensor (F1) and the second sensor (F2) are linked to the differential generator (D), that the differential generator (D) is on the one hand linked direct to a second switching device (S2) and on the other hand via a voltage-to-frequency converter (SF), a frequency divider (FT), a counter (Z) and a memory (SP) to the second switching device (S2), and that the first switching device (S1) is linked electrically to the frequency divider (FT), and that the frequency divider (FT) incorporates a number of frequency divider generators corresponding to the number of switches on the first switching device (S1) and the number of subtiming elements on the first timing element (ZG1).

11. Device according to claim 10, characterised in that a second timing element (ZG2) is disposed between the first timing element (ZG1) and the switching device (S1), that the second timing element (ZG2) is linked to the memory (SP), that the second timing element (ZG2) has at its disposal a preset number of sequential or parallel-operating second subtiming elements that is less than or equal to the number of first subtiming elements on the first timing element (ZG1), and that the second timing element (ZG2) incorporates a reset output (RST) which is linked electrically to the first timing element (ZG1) and second timing element (ZG2).

12. Device according to claim 11, characterised in that a first terminal (H) is linked to a switch-on recognition element (E), that the switch-on recognition element (E) is linked to reset inputs on the first switching device (S1) and on the second switching device (S2) and that the first terminal (H) is linked to terminal 15 or terminal 56 of the vehicle, that the second terminal (B) is linked to an acceleration signal generator, that the second terminal (B) is linked electrically to a threshold value switch (SW) and that the threshold value switch (SW) is linked electrically to the reset inputs of the first timing element (ZG1), of the second timing element (ZG2), of the first switching device (S1), of the second switching device (S2), of the counter (Z) and of the memory (SP) and that the threshold value switch (S) contains a timing element.

13. Device according to claim 12, characterised in that one output of the second switching device (S2) is linked to a first input of a comparator (K), that a second timing signal generator (T2) is linked to the second input of the comparator (K), that the output of the comparator (K) is linked to a filter (FI), the filter (FI) is linked to one or more position servo loops (L), and that the second timing signal generator (T2) generates a saw-tooth signal or a sinusoidal signal.

14. Device according to claim 13, characterised in that the first switching device (S1) and the second switching device (S2) are in the form of RS flipflops which are operatively linked to CMOS switches and that the first timing element (ZG1) and the second timing element (ZG2) and their subtiming elements are in the form of counters.

15. Device according to claim 14, characterised in that some or all of: the differential generator (D), the voltage-to-frequency converter (SF), the frequency divider (FT), the counter (Z), the memory (SP), the second switching device (S2), the second timing signal generator (T2), the comparator (K), the switch-on recognition element (E), the first timing signal generator (T1), the first timing element (ZG1), the second timing element (ZG2) and the first switching device (S1) are combined in a microprocessor.

16. Method for controlling the headlight range or the level of a vehicle, more particularly a motor vehicle, where at at least one point of the front axle and of the rear axle signals are measured which depend on the relative position of the vehicle body to the front axle and the rear axle, where a differential is generated between the signals from the front axle and those from the rear axle, where the resulting differential signals are filtered by averaging them, the averaging taking place within a fixed time interval, and where final controlling elements are triggered if the filtered differential signal deviates from a programmed or previously set value, characterised in that the fixed time interval and the time for which averaging is performed is determined by a preset variable filtering time constant, that with increasing positive and increasing negative acceleration of the vehicle the filtering time constant is continuously or discontinuously reduced to shorter times, that with decreasing positive and with decreasing negative acceleration the filtering time constant is continuously or discontinuously increased to longer times, and that in the event of zero positive and negative acceleration the filtering time constant incorporates a preset limit value.

17. Method according to claim 16, characterised in that a respective filtering time constant is associated with preset ranges of positive and negative acceleration.

18. Method according to claim 17, characterised in that, beginning with zero acceleration, in the event of an increasing and a decreasing positive or negative acceleration at which preset acceleration stages are exceeded the filtering time constant is raised or lowered by a preset factor.

19. Method according to claim 18, characterised in that the filtering time constant depends on the number of values averaged and the scanning rate for the differential signal.

20. Device for carrying out the method according to claim 16, comprising a first sensor on the front wheel axle, a second sensor on the rear wheel axle, the output signals from which sensors depend on the relative position of the body of the vehicle to the wheel axles, further comprising a differential generator which generates the differential between the signals from the front axle and those from the rear axle, also comprising a filter incorporating a mean-value generator where the averaging is predetermined by a filtering time constant, and comprising at least one final control device incorporating final control elements for adjusting headlamps or the level of a vehicle, characterised in that the filter (F) is linked to an acceleration generator (BG) which is linked to a speed of travel generator (FG) and that the filter (F) incorporates means which direct and activate preset filtering time constants to the acceleration signals from the acceleration generator (BG).

21. Device according to claim 20, characterised in that the means are constituted by at least one memory which directs to the acceleration signals a number of values, which are averaged.

22. Device according to claim 21, characterised in that the filter (F) is linked via a respective subtractor (SB) to a respective controller (R), which in turn is linked to a respective motor (M) for adjusting a respective final control element (SE), and that according to the position of each final control element (SE) a respective position signal generator (LG) generates a position signal which is sent to the subtractor (SB) concerned.

**Revendications**

1. Procédé de régulation de la portée de l'éclairage ou de l'assiette d'un véhicule, en particulier d'un véhicule à moteur, procédé dans lequel on mesure, en au moins un emplacement de l'essieu avant et de l'essieu arrière, des signaux qui dépendent de la position relative de la carrosserie du véhicule par rapport à l'essieu avant et à l'essieu arrière, dans lequel on procède à la formation de la différence entre les signaux provenant de l'essieu avant et ceux provenant de l'essieu arrière, dans lequel les signaux de différence qui en résultent sont filtrés par formation d'une valeur moyenne, procédé dans lequel la formation de la valeur moyenne se fait pendant un intervalle de temps défini et dans lequel des éléments réglants sont activés lorsque le signal de différence, filtré, s'écarte d'une valeur prédéterminée ou antérieurement prescrite, procédé caractérisé par le fait que l'intervalle de temps défini et le temps pendant lequel on procède à la formation de la moyenne sont définis par une constante de temps de filtre, prédéterminée et variable, et par le fait qu'au fur et à mesure que la durée de marche du véhicule se poursuit, après un démarrage ou après une mise en circuit de l'installation d'éclairage, ou après une modification du mode de marche du véhicule, la constante de temps du filtre s'accroît pour passer de durées assez courtes à des durées plus longues.

2. Procédé selon la revendication 1, caractérisé par le fait qu'après la formation de la différence entre les signaux provenant de l'essieu avant et ceux provenant de l'essieu arrière, il se fait une conversion tension-fréquence et par le fait que le filtrage est constitué d'un comptage, d'une sommation et d'une mémorisation du signal de différence, étant précisé que le comptage se fait pendant la durée de la constante de temps du filtre chaque fois active et par le fait que cette constante de temps du filtre chaque fois active dérive d'un signal d'horloge par division ou multiplication.

3. Procédé selon la revendication 2, caractérisé par le fait que le comptage est influencé par une division de la fréquence du signal de différence avant le comptage, division qui dépend de la constante de temps du filtre chaque fois active et par le fait qu'après écoulement de la durée de la constante de temps du filtre chaque fois active le comptage prend fin et qu'il est émis un signal de différence cumulé et mémorisé.

4. Procédé selon la revendication 3, caractérisé par le fait qu'après écoulement d'une durée égale à la constante de temps du filtre, c'est la constante de temps du filtre la plus longue immédiatement ensuite qui devient active, par le fait que l'émission du signal de différence, cumulé et mémorisé, après la fin du comptage, se fait avec un retard correspondant à la constante de temps du filtre chaque fois active, et par le fait que le signal de différence, cumulé et mémorisé, est émis sous forme de valeur constante, jusqu'à ce que, après l'écoulement de la durée de la constante de temps du filtre et après le retard défini par la constante de temps du filtre, soit émis un nouveau signal de différence mémorisé.

5. Procédé selon la revendication 4, caractérisé par le fait que, lors d'un démarrage du véhicule ou lors d'une mise en circuit de l'installation d'éclairage du véhicule ou lors d'une modification du mode de marche du véhicule, c'est la constante de temps du filtre la plus courte, ou bien une constante de temps du filtre plus courte que celle qui est chaque fois active, qui est mise en circuit, et par le fait que, lors de la mise en circuit de la constante de temps du filtre la plus courte, le signal de différence est émis directement en shuntant le filtrage, et par le fait qu'après l'écoulement de cette durée de la constante de temps du filtre, pendant laquelle se fait simultanément un filtrage, cette même constante de temps du filtre est encore une fois mise en circuit et, simultanément, se fait une émission du signal de différence filtré et mémorisé.

6. Procédé selon la revendication 5, caractérisé par le fait qu'une modification du mode de marche du véhicule est définie par une valeur de seuil prédéterminée pour une accélération négative du véhicule, ou par une valeur de seuil prédéterminée pour une accélération positive du véhicule, par le fait qu'après un dépassement des valeurs de seuil, une mise hors circuit de l'émission directe ne se fait que si les valeurs de seuil ont été dépassées par valeur négative, et par le fait que l'émission directe ne se fait que si les valeurs de seuil ont été dépassées, par valeur positive, pendant un temps prédéterminé.

7. Procédé selon la revendication 6, caractérisé par le fait que le signal de différence émis est comparé avec un signal se modifiant périodiquement, par le fait que le signal se modifiant périodiquement est un signal en dents de scie ou un signal sinusoïdal, par le fait que l'information du signal se trouve, après comparaison de la distance des flancs, dans le rapport qui apparait entre la présence de l'impulsion et la période totale, et par le fait que le signal qui apparait après cette comparaison et qui présente un rapport entre la présence de l'impulsion et la période totale est filtré et envoyé à un circuit de régulation de position pour régler les phares.

8. Procédé selon la revendication 7, caractérisé par le fait que le filtrage est un redressement du signal.

9. Dispositif de régulation de la portée de l'éclairage ou de l'assiette d'un véhicule, en particulier d'un véhicule à moteur, comportant un premier capteur sur l'essieu avant et un second capteur sur l'essieu arrière, dont les signaux de sortie dépendent de la position relative de la carrosserie du véhicule par rapport aux essieux, comportant aussi un organe de formation d'une différence, qui forme la différence entre les signaux provenant de l'essieu avant et ceux provenant de l'essieu arrière, comportant aussi un filtre qui présente un organe de formation de la valeur moyenne et qui est relié avec un premier élément de temporisation qui définit l'intervalle de temps de la formation de la valeur moyenne, et comportant un dispositif réglant qui présente des éléments réglants pour régler les phares ou l'assiette d'un véhicule, dispositif caractérisé par le fait qu'un premier émetteur du signal d'horloge (T1) est relié avec un premier élément de temporisation (ZG1), par le fait que le premier élément de temporisation (ZG1) dispose d'un nombre prédéterminé de premiers sous-éléments de temporisation successifs, par le fait que les premiers sous-éléments de temporisation déterminent les constantes de temps de filtre, qui vont en croissant dans la succession des premiers sous-éléments de temporisation, par le fait que les premiers sous-éléments de temporisation sont reliés à un premier dispositif de commutation (S1), par le fait que le premier dispositif de commutation (S1) présente des commutateurs qui sont reliés avec les premiers sous-éléments de temporisation et par le fait que les premiers sous-éléments de temporisation du premier élément de temporisation (ZG1) sont électriquement reliés avec le filtre.

10. Dispositif selon la revendication 9, caractérisé par le fait que le premier capteur (F1) et le second capteur (F2) sont reliés avec l'organe de formation de la différence (D), par le fait que l'organe de formation de la différence (D) est relié d'une part directement avec un second dispositif de commutation (S2) et d'autre part, par l'intermédiaire d'un convertisseur tension-fréquence (SF), d'un diviseur de fréquence (FT), d'un compteur (Z) et d'une mémoire (FT), avec le second dispositif de commutation (S2), et par le fait que le premier dispositif de commutation (S1) est électriquement relié avec le diviseur de fréquence (FT) et par le fait que le diviseur de fréquence (FT) présente un nombre d'échelons diviseurs de fréquence qui correspond au nombre des commutateurs du premier dispositif de commutation (S1) et au nombre des sous-éléments de temporisation du premier élément de temporisation (ZG1).

11. Dispositif selon la revendication 10, caractérisé par le fait qu'un second élément de temporisation (ZG2) est disposé entre le premier élément de temporisation (ZG1) et le dispositif de commutation (S1), par le fait que le second élément de temporisation (ZG2) est relié avec la mémoire (SP), par le fait que le second élément de temporisation (ZG2) dispose d'un nombre prédéterminé de seconds sous-éléments de temporisation qui interviennent successivement ou en parallèle, et dont le nombre est inférieur ou égal au nombre des premiers sous-éléments de temporisation du premier élément de temporisation (ZG1) et par le fait que le second élément de temporisation (ZG2) présente une sortie de réinitialisation (RST) qui est électriquement reliée avec le premier élément de temporisation (ZG1) et avec le second élément de temporisation (ZG2).

12. Dispositif selon la revendication 11, caractérisé par le fait qu'une première borne (H) est reliée avec un détecteur de mise en circuit (E), par le fait que le détecteur de mise en circuit (E) est relié avec les entrées de réinitialisation du premier dispositif de commutation (S1) et du second dispositif de commutation (S2) et par le fait que la première borne (H) est reliée avec la borne 15 ou avec la borne 56 du véhicule, par le fait que la seconde borne (B) est reliée avec un émetteur de signal d'accélération, par le fait que la seconde borne (B) est électriquement reliée avec un commutateur à valeur de seuil (W) et par le fait que le commutateur à valeur de seuil (SW) est électriquement relié avec les entrées de réinitialisation du premier élément de temporisation (ZG1), du second élément de temporisation (ZG2), du premier dispositif de commutation (S1), du second dispositif de commutation (S2), du compteur (Z) et de la mémoire (SP), et par le fait que le commutateur à valeur de seuil (SW) contient un élément de temporisation.

13. Dispositif selon la revendication 12, caractérisé par le fait qu'une sortie du second dispositif de commutation (S2) est reliée avec une première entrée d'un comparateur (K), par le fait qu'un second émetteur de signal d'horloge (T2) est relié avec la seconde entrée du comparateur (K), par le fait que la sortie du comparateur (K) est reliée avec un filtre (FI), par le fait que le filtre (FI) est relié avec un ou plusieurs circuits de régulation de position (L) et par le fait que le second émetteur de signal d'horloge (T2) produit un signal en dents de scie ou un signal sinusoïdal.

14. Dispositif selon la revendication 13, caractérisé par le fait que le premier dispositif de commutation (S1) et le second dispositif de commutation (S2 sont conçus sous forme de bascules RS, qui sont positivement reliées avec des commutateurs réalisés sous forme d'un circuit intégré C-MOS et par le fait que le premier élément de temporisation (ZG1) et le second élément de temporisation (ZG2) et leurs sous-éléments de temporisation sont conçus sous forme de compteurs.

15. Dispositif selon la revendication 14, caractérisé par le fait que l'organe de formation d'une différence (D), le convertisseur tension-fréquence (SF), le diviseur de fréquence (SP), le compteur (Z), la mémoire (SP), le second dispositif de commutation (S2), le second émetteur de signal d'horloge (T2), le comparateur (K), le détecteur de mise en circuit (E), le premier émetteur de signal d'horloge (T1), le premier élément de temporisation (ZG1), le second élément de temporisation (ZG2) et le premier dispositif de commutation (S1) sont partiellement ou complètement regroupés dans un microprocesseur.

16. Procédé de régulation de la portée de l'éclairage ou de l'assiette d'un véhicule, en particulier d'un véhicule à moteur, procédé dans lequel on mesure, en au moins un emplacement de l'essieu avant et de l'essieu arrière, des signaux qui dépendent de la position relative de la carrosserie du véhicule par rapport à l'essieu avant et à l'essieu arrière, dans lequel on procède à la formation de la différence entre les signaux provenant de l'essieu avant et ceux provenant de l'essieu arrière, dans lequel les signaux de différence qui en résultent sont filtrés par formation d'une valeur moyenne, procédé dans lequel la formation de la valeur moyenne se fait pendant un intervalle de temps défini et dans lequel des éléments réglants sont activés lorsque le signal de différence, filtré, s'écarte d'une valeur prédéterminée ou antérieurement prescrite, procédé caractérisé par le fait que l'intervalle de temps défini et le temps pendant lequel se fait la formation de la moyenne sont déterminés par une constante de temps de filtre prédéterminée et variable, par le fait que dans le cas d'une accélération positive croissante et dans le cas d'une accélération négative croissante du véhicule, la constante de temps du filtre décroît de façon continue ou discontinue, pour aboutir à des durées plus courtes, par le fait que dans le cas d'une accélération positive décroissante et dans le cas d'une accélération négative décroissante, la constante de temps de filtre croît de façon continue ou discontinue pour aboutir à des durées plus longues, et par le fait que dans le cas d'une accélération positive et d'une accélération négative égale à zéro, la constante de temps de filtre présente une valeur limite prédéterminée.

17. Procédé selon la revendication 16, caractérisé par le fait qu'à des plages prédéterminées d'accélération positive et négative correspond chaque fois une constante de temps de filtre.

18. Procédé selon la revendication 17, caractérisé par le fait qu'en commençant avec une accélération égale à zéro, dans le cas d'une accélération positive ou négative croissante et d'une accélération positive ou négative décroissante, lors du dépassement d'échelons d'accélération prédéterminés, la constante de temps de filtre croît ou décroît d'un facteur prédéterminé.

19. Procédé selon la revendication 18, caractérisé par le fait que la constante de temps de filtre dépend du nombre des valeurs à partir desquelles se forme la moyenne et de la cadence d'échantillonnage pour le signal de différence.

20. Dispositif pour l'exécution du procédé selon la revendication 16, comportant un premier capteur sur l'essieu avant, un second capteur sur l'essieu arrière, dont les signaux de sortie dépendent de la position relative de la carrosserie du véhicule par rapport aux essieux, comportant un organe de formation d'une différence qui forme la différence entre les signaux provenant de l'essieu avant et ceux provenant de l'essieu arrière, comportant un filtre qui présente un organe de formation de la valeur moyenne pour lequel la formation de la valeur moyenne est prédéterminée par une constante de temps de filtre, et comportant au moins un dispositif réglant qui présente des éléments réglants pour régler les phares ou l'assiette d'un véhicule, dispositif caractérisé par le fait que le filtre (F) est relié avec un émetteur d'accélération (VG) qui est relié avec un émetteur de vitesse du véhicule (FG) et par le fait que le filtre (F) présente des moyens qui attribuent aux signaux d'accélération provenant de l'émetteur d'accélération (BG), des constantes de temps de filtre prédéterminées et mettent en circuit ces constantes.

21. Dispositif selon la revendication 20, caractérisé par le fait que les moyens sont formés par au moins une mémoire qui attribue aux signaux d'accélération un certain nombre de valeurs à partir desquelles se forme la moyenne.

22. Dispositif selon la revendication 21, caractérisé par le fait que le filtre (F) est relié, par l'intermédiaire chaque fois d'un soustracteur (SB), avec chaque fois un régulateur (R) qui est relié avec chaque fois un moteur (M) pour entrainer chaque fois un élément réglant (SE), et par le fait qu'en fonction de la position de chaque élément réglant (SE), par chaque fois, un émetteur de signal de position (LG) est formé un signal de position qui est amené au soustracteur respectif (SB).

# FIG 1

EP 0 355 539 B1

FIG 2

# FIG 3

EP 0 355 539 B1